(19) Europäisches Patentamt

European Patent Office

Office européen des brevets

(11) EP 1 293 969 B1

(12) EUROPEAN PATENT SPECIFICATION

(45) Date of publication and mention
of the grant of the patent:
**14.06.2006 Bulletin 2006/24**

(51) Int Cl.:
***G11B 5/64*** (2006.01)

(21) Application number: **02020514.2**

(22) Date of filing: **13.09.2002**

(54) **Magnetic recording medium**

Magnetisches Aufzeichnungsmittel

Moyen d' enregistrement magnétique

(84) Designated Contracting States:
**DE FR GB**

(30) Priority: **14.09.2001 JP 2001279403**
**21.09.2001 JP 2001288946**
**21.09.2001 JP 2001288947**

(43) Date of publication of application:
**19.03.2003 Bulletin 2003/12**

(60) Divisional application:
**04014238.2 / 1 457 972**

(73) Proprietor: **FUJI PHOTO FILM CO., LTD.**
**Minami-Ashigara-shi, Kanagawa-ken 250-0123**
**(JP)**

(72) Inventors:
• **Usuki, Kazuyuki**
**Odawara-shi,**
**Kanagawa 250-0001 (JP)**
• **Moriwaki, Kenichi**
**Odawara-shi,**
**Kanagawa 250-0001 (JP)**
• **Katayama, Kazutoshi**
**Odawara-shi,**
**Kanagawa 250-0001 (JP)**
• **Nagao, Makoto**
**Odawara-shi,**
**Kanagawa 250-0001 (JP)**

(74) Representative: **HOFFMANN EITLE**
**Patent- und Rechtsanwälte**
**Arabellastrasse 4**
**81925 München (DE)**

(56) References cited:
JP-A- 3 245 324 JP-A- 10 088 333
JP-A- 11 328 647 JP-A- 2001 126 246
US-A- 4 666 788 US-A- 5 989 674
US-A1- 2001 016 272 US-B1- 6 277 484

**Description**

BACKGROUND OF THE INVENTION

The present invention relates to a magnetic recording medium using a flexible polymer support member such as magnetic tape, flexible disk, etc. In particular, the invention relates to high capacity magnetic tape, high capacity flexible disk, etc., which can be used for high-density magnetic recording.

In recent years, to cope with the handling of large-capacity image information due to extensive propagation of information technology such as Internet, a large-capacity hard disk is used in personal computer. In order to back up large- capacity information stored in the hard disk or to try to use the information in another computer, various types of removable recording medium are used.

Flexible magnetic recording medium such as magnetic tape, flexible disk, etc. is characterized in that the time required for recording and reading of information is short as in case of hard disk and the devices required for recording and reading of the information are also designed in small size. For this reason, the magnetic tape and the flexible disk are used for the purpose of backing up the computer or for storing large capacity data as a typical removable type recording medium. There are now strong demands on a type of magnetic recording medium, which can store large-capacity data in small number of magnetic tapes and flexible disks.

In the magnetic recording medium using a flexible polymer support member such as magnetic tape, flexible disk, etc., a coating type magnetic recording medium and a deposition type magnetic recording medium are used. In the coating type magnetic recording medium, magnetic particles containing metals such as iron, cobalt, etc. on a substrate are dispersed in a polymer binder and coated. In the deposition type magnetic recording medium, a cobalt alloy is deposited under vacuum condition and a film is formed.

Compared with the coating type magnetic recording medium, the deposition type magnetic recording medium is more suitable for high-density recording. The magnetic layer of the flexible type magnetic recording medium where metal thin film is formed by vacuum deposition causes more noises compared with ferromagnetic metal thin film formed by sputtering of cobalt alloy as used in the hard disk. In the head for high-density recording using magnetic resistance element, sufficient electromagnetic transfer characteristics cannot be obtained, and it is not suitable for high-density recording.

In this connection, several studies have been reported, in which attempts have been made to prepare a ferromagnetic metal thin film tape by sputtering as in the case of hard disk, but it is not yet used in practical application.

The reasons are as follows: In the manufacture of hard disk, a substrate is heated up to about 200°C during sputtering. If this method is applied in the manufacture of magnetic tape or flexible disk, polyethylene terephthalate or polyethylene naphthalate commonly used as a base material for magnetic tape or flexible disk does not have sufficient heat-resistant property and is easily deformed. Even when aromatic polyamide film with high heat-resistant property is used, dimensional changes such as thermal expansion, thermal shrinking, humidity expansion, etc. of the film occur during the manufacturing process. Thus, it has been difficult to manufacture a magnetic tape with less possibility of deformation.

In case of the flexible disk, a magnetic layer is formed using a band-like base material similar to the magnetic tape. Then, it is punched to a predetermined disk shape, and this causes the problems similar to those described above.

It is an object of the present invention to provide a magnetic recording medium, which is useful as a magnetic recording medium using magnetic tape, flexible disk, etc., and which can be used as a removable type magnetic recording medium suitable for high-density recording.

It is another object of the present invention to provide a magnetic recording medium with excellent characteristics, which comprises a specific primer layer at least on one surface of a nonmagnetic substrate.

**SUMMARY OF THE INVENTION**

The present invention provides a magnetic recording medium, which comprises a magnetic layer at least on one surface of a flexible polymer support member, said magnetic layer comprises a cobalt-containing ferromagnetic metal alloy and a nonmagnetic oxide, wherein the mixing ratio of the cobalt-containing ferromagnetic metal alloy and the nonmagnetic oxide is in the following range: ferromagnetic metal alloy : nonmagnetic oxide = 90 : 10 to 85 : 15 (atom ratio).

Also, the present invention provides the magnetic recording medium as described above, wherein said magnetic layer comprises a ferromagnetic metal alloy containing at least cobalt, platinum and chromium, and a nonmagnetic material.

Further, the present invention provides a magnetic recording medium, which comprises a chromium-containing primer layer and a magnetic layer at least on one surface of a nonmagnetic support member, said chromium-containing primer layer contains chromium and at least one type of element selected from a group of cobalt, beryllium, osmium, rhenium, titanium, zinc, tantalum, aluminum, molybdenum, tungsten, vanadium, iron, antimony, iridium, ruthenium, rhodium, platinum, palladium, silicon, and zirconium, and said magnetic layer comprises a ferromagnetic metal alloy containing at least cobalt, platinum and chromium, and a nonmagnetic material.

Also, the present invention provides a magnetic recording medium, which comprises a primer layer containing at least ruthenium, and a magnetic layer at least on one surface of a nonmagnetic substrate, said magnetic layer comprising a ferromagnetic metal alloy containing at least cobalt, platinum and chromium, and a nonmagnetic material.

Further, the present invention provides a method for manufacturing a magnetic recording medium, which is defined in claims 6 to 12.

BRIEF DESCRIPTION OF THE DRAWINGS

Fig. 1 represents cross-sectional views, each showing an embodiment of the present invention;
Fig. 2 represents cross-sectional views, each showing another embodiment of the present invention;
Fig. 3 represents cross-sectional views, each showing still another embodiment of the present invention;
Fig. 4 represents cross-sectional views, each showing a magnetic layer of the magnetic recording medium shown in Fig. 3;
Fig. 5 represents cross-sectional views, each showing still another embodiment of the present invention;
Fig. 6 represents cross-sectional views, each showing a magnetic layer of the magnetic recording shown in Fig. 5;
Fig. 7 is a schematical drawing to explain a method for forming a magnetic layer on a flexible polymer support member; and
Fig. 8 is a schematical drawing to explain an example of CVD apparatus utilizing high frequency plasma and applicable to the present invention.

DESCRIPTION OF THE PREFERRED EMBODIMENTS

In the magnetic recording medium of the present invention, a magnetic layer comprising a cobalt-containing ferromagnetic metal alloy and a nonmagnetic oxide is provided at least on one surface of a flexible polymer support member. This can be produced by methods such as sputtering even when the temperature of the flexible polymer support member is at room temperature. Thus, a magnetic recording medium with excellent characteristics can be produced even when a flexible polymer support member may be used as a base material, which is deformable when heated at high temperature.

Also, by forming a specific primer layer on the nonmagnetic support member, it is possible to produce a magnetic recording medium, which has a magnetic layer with excellent characteristics.

Description will be given below on the present invention referring to the drawings.

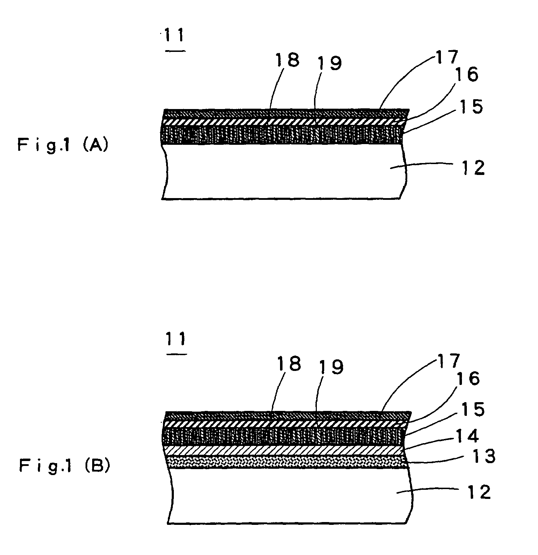

Fig. 1 represents cross-sectional views, each showing an embodiment of the present invention.

Fig. 1 (A) is a drawing to explain an embodiment of the present invention where the magnetic recording medium is a magnetic tape, and it is a cross-sectional view showing a part of it.

A magnetic tape 11 comprises a magnetic layer 15 formed on a band-like flexible polymer support member 12, and the magnetic layer 15 comprises a cobalt-containing ferromagnetic metal alloy 18 and a nonmagnetic oxide 19. On the magnetic layer 15, a protective layer 16 is formed, which prevents deterioration of the magnetic layer due to oxidation and protects from wearing caused by the contact with a head or a sliding member. Also, a lubricating layer 17 is provided on the protective layer 16 for the purpose of improving running durability and corrosion-resistant property.

As shown in Fig. 1 (B), an undercoating layer 13 is arranged on the surface of the flexible polymer support member 12 in addition to the arrangement shown in Fig. 1 (A). This undercoating layer 13 makes it possible to adjust surface property of the flexible polymer support member 12 and to prevent a gas generated from the flexible polymer support member 12 from reaching the magnetic layer 15. Further, a primer layer 14 is provided, which controls crystal orientation of the ferromagnetic metal on the magnetic layer 15 and to attain better recording characteristics.

In the magnetic tape shown in Fig. 1 (B), crystal orientation of the ferromagnetic metal is improved by the primer layer. Compared with the one shown in Fig. 1 (A), a tape with much better characteristics can be obtained.

The magnetic tape can be used in form of an open reel or as a tape incorporated in a cartridge.

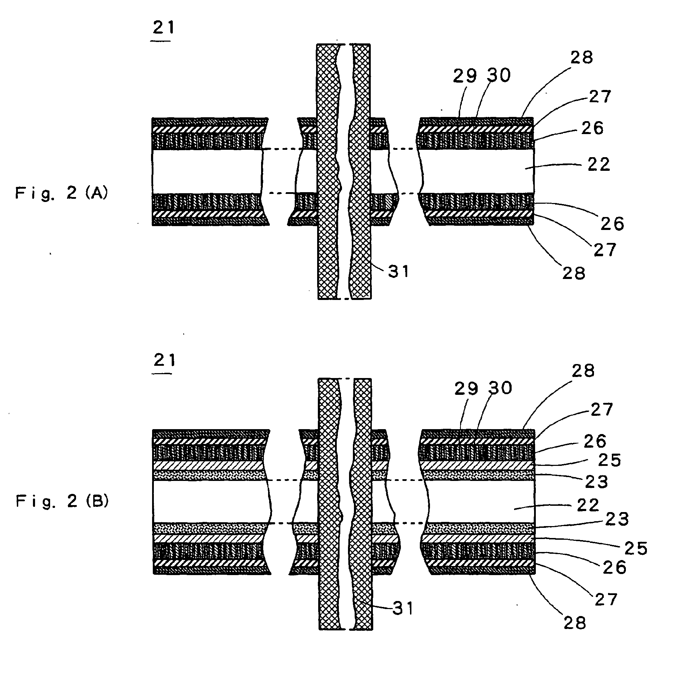

Fig. 2 represents cross-sectional views, each showing another embodiment of the present invention.

Fig. 2 (A) is a drawing to explain a case where the magnetic recording medium is a flexible disk.

A flexible disk 21 comprises magnetic layers 26 each formed on each surface of a flexible polymer support member 22. Each of the magnetic layers 26 comprises a cobalt-containing ferromagnetic metal alloy 29 and a nonmagnetic material 30. On each of the magnetic layers 26, a protective layer 27 is formed, which prevents deterioration of the magnetic layer due to oxidation and protects from wearing caused by the contact with a head or a sliding member.

Also, on the protective layer 27, a lubricating layer 28 is provided with the purpose of improving running durability and corrosion-resistant property. At the center of the flexible disk, there is provided engaging means 31 to make the flexible disk engaged on a flexible disk drive.

In the magnetic recording medium shown in Fig. 2 (B), an undercoating layer 23 is arranged on the surface of the flexible polymer support member 22 for the purpose of adjusting surface characteristics of the flexible polymer support member 22 and of preventing a gas generated from the flexible polymer support member 22 from reaching the magnetic layer 26. Further, there is provided a primer layer 25, which controls crystal orientation of the ferromagnetic metal formed on the magnetic layer 26 and to improve recording characteristics.

Compared with the flexible disk shown in Fig. 2 (A), the flexible disk shown in Fig. 2 (B) has better crystal orientation of the ferromagnetic metal due to the primer layer and has higher magnetic characteristics.

The magnetic layer formed on the magnetic recording medium of the present invention has a ferromagnetic metal thin-film magnetic layer, which comprises a cobalt-containing ferromagnetic metal alloy and a nonmagnetic oxide. As a result, high-density recording as that of a hard disk can be achieved. This makes it possible to obtain a removable type magnetic recording medium with high capacity.

The magnetic layer in the magnetic recording medium of the present invention may be the so-called vertical magnetic recording film, which has an axis of easy magnetization running perpendicularly to the surface of the magnetic layer, or it may be an in-plane magnetic recording film, which has an axis of easy magnetization in horizontal direction. The direction of the axis of easy magnetization can be controlled by the material and the crystal structure of the primer layer and by composition and film-forming condition of the magnetic film.

The magnetic layer comprises a cobalt-containing ferromagnetic metal alloy and a nonmagnetic oxide. Because fine ferromagnetic metal alloy crystals are evenly dispersed, high coercive force can be achieved and dispersion property is evenly distributed. As a result, a magnetic recording medium with lower noise can be obtained.

As the cobalt-containing ferromagnetic metal alloy, an alloy of Co with elements such as Cr, Ni, Fe, Pt, B, Si, Ta, etc. may be used. It is preferable to use Co-Pt, Co-Cr, Co-Pt-Cr, Co-Pt-Cr-Ta, Co-Pt-Cr-B, etc. because better magnetic recording characteristics can be obtained.

For instance, a preferable element composition for a CoPtCr alloy to be used for in-plane recording is a composition of the following elements in the following range: Co in 65 - 80 atom %, Pt in 5 - 20 atom %, and Cr in 10 - 20 atom %. When a nonmagnetic element such as B, Ta, etc. is added, it may be added in such manner that it is substituted with Pt or Cr within the range of 10 atom %. As a preferable composition of CoPt alloy to be used for vertical recording, a composition of elements in the following range may be used: Co in 70 - 85 atom % and Pt in 15 - 30 atom %. The higher the content of Co is, the more the magnetization is increased, and reproduced signal output is increased. Noise is increased at the same time. On the other hand, the higher the content of nonmagnetic elements such as Cr, Pt, etc. is, the more the magnetization is decreased, but coercive force is increased. Thus, reproduced signal output is decreased while noise is decreased. Therefore, it is preferable to adjust mixing ratio of these elements depending on the magnetic head used and the equipment in use.

Anisotropy of magnetization can be adjusted by argon pressure during film formation in addition to the composition. It is preferable to determine the anisotropy by the primer layer as described below. In case the primer layer is not used or in case amorphous material is used, the magnetic layer is more easily oriented in vertical direction. When Cr or its alloy or Ru or its alloy is used, it is more easily oriented in in-plane direction.

As the nonmagnetic oxide, an oxide of Si, Zr, Ta, B, Ti, Al, etc. may be used. When an oxide of silicon is used, the best recording characteristics can be obtained.

Mixing ratio of the cobalt-containing ferromagnetic metal alloy and the nonmagnetic oxide is in the following range: Ferromagnetic metal alloy : nonmagnetic oxide = 90:10 to 85:15 (atom ratio). By setting the mixing ratio within this range, sufficient separation can be kept between magnetic particles. This eliminates the decrease of thermal decay, and amount of magnetization can be maintained at high level. As a result, high signal output can be attained.

In the magnetic layer, which is a mixture of the cobalt-containing ferromagnetic metal alloy and the nonmagnetic oxide, its thickness is preferably in the range of 10 nm to 60 nm, or more preferably in the range of 20 nm to 40 nm. In the magnetic layer with the thickness in this range, noise can be decreased and higher output can be obtained.

As a method for forming the magnetic layer, which comprises the cobalt-containing ferromagnetic metal alloy and the nonmagnetic material such as nonmagnetic oxide, vacuum film-forming method such as vacuum deposition method, sputtering method, etc. may be used. Above all, the sputtering method can form thin film of good quality, and it is suitable for the purpose of the present invention. As the sputtering method, DC sputtering method or RF sputtering method can be used. In the sputtering method, it is preferable to use a web sputtering apparatus, which can continuously form the film on a continuous film.

As a gas to be used in atmosphere during sputtering, argon may be used, while other type of rare gas may be used. A slight quantity of oxygen may be introduced to adjust oxygen content in the nonmagnetic oxide.

In particular, when a magnetic layer is produced, which comprises the cobalt-containing ferromagnetic metal alloy and the nonmagnetic oxide, and the sputtering method is used for this purpose as in the present invention, two types of targets, i.e. a ferromagnetic metal alloy target and a nonmagnetic oxide target may be used, and co-sputtering method with these two targets may be adopted. If a mixture target is used, which is a uniform mixture of the ferromagnetic metal alloy and the nonmagnetic oxide and which concurs with composition ratio of the ferromagnetic metal alloy and the nonmagnetic oxide to be produced, a magnetic layer with uniformly dispersed ferromagnetic metal alloy can be obtained. This mixture target can be produced by hot press method.

Description will be given now on a case where the magnetic recording medium is a magnetic tape.

As the flexible support member to be used in the magnetic tape, a synthetic resin film is used. More concretely, a synthetic resin film comprising aromatic polyimide, aromatic polyamide, aromatic polyamideimide, polyether ketone, polyether sulfone, polyether imide, polysulfone, polyphenylene sulfide, polyethylene naphthalate, polyethylene terephthalate, polycarbonate, triacetate cellulose, fluororesin, etc. may be used. According to the present invention, high recording characteristics can be attained without heating the substrate. Thus, it is preferable to use polyethylene terephthalate or polyethylene naphthalate, which has high surface property and is easily available.

The thickness of the flexible polymer support member is preferably in the range of 3 $\mu$m to 20 $\mu$m, or more preferably in the range of 4 $\mu$m to 12 $\mu$m. If the thickness of the flexible polymer support member is thinner than 3 $\mu$m, the strength is insufficient, and this often leads to breakage or edge defect. On the other hand, if the thickness of the flexible polymer support member is thicker than 20 $\mu$m, the length of the magnetic tape to be wound up per one set of the magnetic tape will be shorter, and this results in lower volume recording density. Also, rigidity is increased. As a result, the contact to the magnetic head, i.e. follow-up property, is aggravated.

To ensure good recording and reading of information through contact with the magnetic head, it is preferable that the surface of the flexible polymer support member is as smooth as possible. Surface irregularities of the flexible polymer support member cause extreme decrease in the recording and reproduction characteristics of signal.

More concretely, when the undercoating layer as described later is used, surface roughness measured using a light interference type surface roughness meter is preferably in the range of 5 nm in central surface average roughness (SRa), or more preferably within 2 nm.

Projection height measured using a feeler type roughness meter is within 1 $\mu$m, or more preferably within 0.1 $\mu$m. When the undercoating layer is not used, central surface average roughness (SRa) measured by a light interference type surface roughness meter is within 3 nm, or more preferably within 1 nm. Projection height measured by a feeler type roughness meter is within 0.1 $\mu$m, or more preferably within 0.06 $\mu$m.

To ensure better surface flatness and higher gas shut-off property, it is preferable to provide an undercoating layer on the surface of the flexible polymer support member. Because the magnetic layer is formed by the method such as sputtering, the undercoating layer preferably has high heat-resistant property. As the material of the undercoating layer, polyimide resin, polyamidemide resin, silicone resin, fluororesin, etc. may be used. It is more preferable to use solvent-soluble type polyimide resin, thermosetting type polyimide resin, or thermosetting type silicone resin because better smoothening effect can be attained. The thickness of the undercoating layer is preferably in the range of 0.1 $\mu$m to 3.0 $\mu$m.

As the thermosetting silicone resin, a silicone resin produced through polymerization by sol-gel method using silicon compound with organic radical introduced in it may be optimally used. In this silicone resin, a part of the bond of silicon dioxide is substituted with an organic radical, and it has much higher heat-resistant property than silicone rubber and has higher flexibility than silicon dioxide film. Accordingly, when a resin film is formed on a polymer support member comprising flexible film, cracking or peeling hardly occurs. Also, a raw material monomer can be directly coated on the flexible polymer support member and can be hardened. Moreover, the monomer is dissolved in a general-type organic solvent and can be coated. This makes it possible to prevent distortion or warping avoiding surface irregularities and higher smoothening effect can be provided. Further, condensation polymerization reaction occurs from relatively low temperature when a catalyst such as acid or chelating agent is added. Thus, it can be hardened within short time, and resin film can be formed by using a general-purpose coating apparatus.

The thermosetting silicone resin has high gas shut-off property. As a result, it can shut off the gas, which is generated from the flexible polymer support member during the formation of the magnetic layer or the primer layer and which impairs crystallization property and orientation of the magnetic layer or the primer layer, and it is suitable for this purpose.

On the surface of the undercoating layer, it is preferable to provide micro-projections (texture) in order to decrease actual contact area between the sliding member such as magnetic tape, guide pole, etc. and also to ensure the improvement of the sliding property. By providing micro-projections, the handling of the flexible polymer support member can be made much easier. To form the micro-projections, a method to coat spherical silica particles or a method to coat emulsion and to form projections of organic substance may be used. To maintain heat-resistant property of the undercoating layer, it is preferable to coat the spherical silica particles and to form micro-projections.

The height of the micro-projection is preferably in the range of 5 nm to 60 nm, or more preferably in the range of 10 nm to 30 nm. If the micro-projections are too high, signal recording and reproduction characteristics are decreased due to spacing loss of the recording and reproducing head and the magnetic recording medium. If the micro-projections are too low, the effect to improve the sliding property is decreased. The density of the micro-projections is preferably in the range of 0.1 to 100 projections/$\mu$m$^2$, or more preferably in the range of 1 to 10 projections/$\mu$m$^2$. If the density of the micro-projections is too low, the effect to improve the sliding property is decreased. If the density is too high, high projections are increased due to the increase of aggregated particles, and this leads to deterioration of the recording and reproducing characteristics.

The micro-projections can be fixed on the surface of the support member by using a binder. As the binder, it is preferable to use a resin with high heat-resistant property. As the resin with high heat-resistant property, it is preferable to use a solvent-soluble type polyimide resin, thermosetting type polyimide resin, or thermosetting type silicone resin.

It is preferable to provide a primer layer under the magnetic layer. As the material of the primer layer, Cr or an alloy of Cr with a metal element selected from Ti, Si, W, Ta, Zr, Mo, Nb, etc. or Ru, C, etc. may be used. These substances may be used alone or in combination of two or more. By the use of the primer layer, it is possible to improve orientation property of the magnetic layer, and recording characteristics can be improved. The thickness of the primer layer is preferably in the range of 10 nm to 200 nm, or more preferably in the range of 20 nm to 100 nm.

In particular, it is preferable that the magnetic layer is designed in column-like form by the primer layer. By producing the magnetic layer in form of column, separation structure between the ferromagnetic metals is stabilized. Higher coercive force can be obtained, and higher output can be achieved. The ferromagnetic metal can be more evenly distributed, and a magnetic recording medium with lower noise can be prepared.

Further, to improve crystalline property of the primer layer, a seed layer may be provided between the primer layer and the flexible polymer support member. As the seed layer, Ta, Ta-Si, Ni-P, Ni-Al, etc. may be used.

When anisotropy of magnetization is set to vertical direction, a soft magnetic layer may be provided between the magnetic layer and the flexible polymer support member. By providing the soft magnetic layer, it is possible to have better electromagnetic transfer characteristics when a vertical recording head such as single magnetic pole head is used. As the soft magnetic material, Permalloy or Sendust may be used. Its thickness is preferably in the range of 30 nm to 500 nm.

A protective layer is arranged on the magnetic layer. The protective layer is provided to prevent corrosion of metal materials contained in the magnetic layer, to avoid wearing due to pseudo-contact or contact sliding between the magnetic head and the magnetic tape, and to ensure better running durability and higher corrosion-resistant property. As the-protective layer, oxides such as silica, alumina, titania, zirconia, cobalt oxide, nickel oxide, etc., nitrides such as titanium nitride, silicon nitride, boron nitride, etc., carbides such as silicon carbide, chromium carbide, boron carbide, etc., carbon such as graphite, amorphous carbon, etc. may be used.

As the protective layer, it is preferable to use a hard film, which has hardness equal to or higher than the hardness of the magnetic head material and which is hardly subjected to seizure during sliding operation and has stable and continuous effect because such material can maintain good sliding durability. Also, the material with fewer pin holes is preferably used because it has higher corrosion-resistant property. As such protective film, a hard carbon film called "diamond-like carbon" (DLC) produced by CVD method is used. The protective layer may comprise two or more types of thin films having different property and laminated one upon another. For instance, a hard carbon protective film to improve the sliding characteristics may be provided on surface side, and a nitride protective film such as silicon nitride to improve corrosion-resistant property may be provided on the magnetic recording layer side. This makes it possible to provide both corrosion-resistant property and high durability.

On the protective layer, a lubricating layer is provided to ensure high running durability and good corrosion-resistant property. As the lubricant, hydrocarbon type lubricant, fluorine type lubricant, extreme-pressure additive, etc. as already known in the art may be used.

As the hydrocarbon type lubricant, carboxylic acids such as stearic acid, oleic acid, etc., esters such as butyl stearate, sulfonic acids such as octadecyl sulfonic acid, phosphoric acid esters such as monooctadecyl phosphate, alcohols such as stearyl alcohol, oleyl alcohol, etc., carboxylic acid amide such as stearic acid amide, etc., or amines such as stearyl amine may be used.

As the fluorine type lubricant, a lubricant prepared by substituting a part or all of the alkyl groups in the hydrocarbon type lubricant by fluoroalkyl group or perfluoropolyether group may be used. As the perfluoropolyether group, perfluoromethylene oxide polymer, perfluoroethylene oxide polymer, perfluoro-n-propylene oxide polymer $(CF_2CF_2CF_2O)_n$, perfluoroisopropylene oxide polymer $(CF(CF_3)CF_2O)_n$ or copolymer of these compounds may be used.

More concretely, perfluoromethylene-perfluoroethylene copolymer (Trade name: Fomblin Z-Dol; manufactured by Ausimont Co., Ltd.) having hydroxyl group at the molecular weight terminal may be used.

As the extreme-pressure additive, phosphoric acid esters such as trilauryl phosphate, phosphorous acid esters such as trilauryl phosphite, thiophosphorous acid esters such as trilauryl trithiophosphite, sulfur type extreme-pressure agent such as dibenzyl disulfide may be used.

The above lubricants may be used alone or in combination of two or more. A solution obtained by dissolving the lubricant in organic solvent may be coated on the surface of the protective layer by spin coating method, wire bar coating method, gravure coating method, dip coating method, etc. or the lubricant may be attached on the surface of the protective layer by vacuum deposition method. The amount of coating of the lubricant is preferably in the range of 1 to 30 mg/m$^2$, or more preferably in the range of 2 to 20 mg/m$^2$.

To have higher corrosion-resistant property, it is preferable to use a rust-preventive agent simultaneously. As the rust-preventive agent to be used in the present invention, nitrogen-containing heterocyclic compounds such as benzotriazole, benzimidazole, purine, pyrimidine, etc., derivatives prepared by introducing alkyl side-chain to the base nucleus, nitrogen- or sulfur-containing hetero-cyclic compounds and derivatives such as benzothiazole, 2-mercaptobenzothiazole, tetrazaindene cyclic compound, or thiouracil compound may be used. These rust-preventive agents may be mixed with the lubricant and coated on the protective layer. Or, it may coated on the protective layer before the coating of the lubricant, and then, the lubricant may be coated on it. The amount of coating of the rust-preventive agent is preferably in the range of 0.1 to 10 mg/m$^2$, or more preferably in the range of 0.5 to 5 mg/m$^2$.

On the surface of the flexible polymer support member opposite to the surface where the magnetic layer is formed, it is preferable to provide a back-coating layer. The back-coating layer provides lubricating effect to prevent wearing of the backside of the magnetic recording medium when the magnetic recording medium is slid against the sliding member. By adding the lubricant or the rust-preventive agent to be used in the lubricating layer to the back-coating layer, the lubricant or the rust-preventive agent is supplied from the back-coating side to the magnetic layer side, and this makes it possible to maintain corrosion-resistant property of the magnetic layer for long time. By adjusting pH value of the back-coating layer itself, it is possible to increase the corrosion-resistant property of the magnetic layer further.

The back-coating layer may be prepared as follows: Nonmagnetic powder such as carbon black, calcium carbonate, alumina, etc. and resin binder such as polyvinyl chloride or polyurethane, and further, lubricant or hardening agent are dispersed in an organic solvent. Then, this solution is coated by gravure coating method or wire bar coating method and is dried.

To apply the rust-preventive agent or the lubricant to the back-coating layer, it may be dissolved in the solution as described above or it may be coated directly on the back-coating layer.

Next, description will be given below on a case where the magnetic recording medium is a flexible disk. In order to avoid shock when the magnetic head is brought into contact with the flexible disk, the support member of the flexible disk comprises a synthetic resin film with flexibility, i.e. a flexible polymer support member. As the synthetic resin film, a synthetic resin film comprising aromatic polyimide, aromatic polyamide, aromatic polyamideimide, polyether ketone, polyether sulfone, polyether imide, polysulfone, polyphenylene sulfide, polyethylene naphthalate, polyethylene terephthalate, polycarbonate, triacetate cellulose, fluororesin, etc. may be used. According to the present invention, high recording characteristics can be attained without heating the substrate. Thus, it is preferable to use polyethylene terephthalate or polyethylene naphthalate, which has high surface property and is easily available.

Or, two or more synthetic resin films may be laminated one upon another and this may be used as the flexible polymer support member. By using a laminated film with two or more synthetic resin films laminated one upon another, it is possible to eliminate or alleviate warping or undulation due to the flexible polymer support member itself. As a result, vulnerability of the magnetic recording layer can be extremely improved, which may be caused when the surface of the magnetic recording medium collides with the magnetic head.

As the methods to laminate the flexible films, a roll laminating method to use hot roll, a plane lamination method by plane hot press, a dry laminating method to coat an adhesive agent on the surface and to laminate, or a method to use adhesive sheet fabricated in form of sheet in advance may be used. When an adhesive agent is used for lamination, hot melt adhesive agent, thermosetting adhesive agent, UV-setting adhesive agent, EB-setting adhesive agent, adhesive sheet, or anaerobic adhesive agent may be used.

The thickness of the flexible polymer support member is preferably in the range of 10 $\mu$m to 200 $\mu$m, or more preferably in the range or 20 $\mu$m to 150 $\mu$m, or most preferably in the range of 30 $\mu$m to 100 $\mu$m. If the thickness of the flexible polymer support member is thinner than 10 $\mu$m, stability during high-speed rotation is decreased and surface deviation is increased. On the other hand, if the thickness of the flexible polymer support member is thicker than 200 $\mu$m, rigidity is increased during rotation, and it is difficult to avoid the shock at the moment of contact, and this may cause jumping of the magnetic head.

Further, the value of the toughness of the flexible polymer support member as expressed in the formula given below when b = 10 mm is preferably in the range of 4.9 MPa to 19.6 MPa (0.5 kgf/mm$^2$ to 2.0 kgf/mm$^2$), or more preferably in the range of 6.9 MPa to 14.7 MPa (0.7 kgf/mm$^2$ to 1.5 kgf/mm$^2$) :

**Toughness of flexible polymer support member**

$$= \mathbf{Ebd}^3/12$$

where E is Young's modulus, b is film width, and d is film thickness.

To ensure good recording and reading of information through contact with the magnetic head, it is preferable that the surface of the flexible polymer support member is as smooth as possible. Surface irregularities of the flexible polymer support member causes extreme decrease in the recording and reproduction characteristics of signal.

More concretely, when the undercoating layer as described later is used, surface roughness measured using a light interference type surface roughness meter is preferably in the range of 5 nm in central surface average roughness (SRa), or more preferably within 2 nm. Projection height measured using a feeler type roughness meter is within 1 $\mu$m, or more preferably within 0.1 $\mu$m. When the undercoating layer is not used, central surface average roughness (SRa) measured by a light interference type surface roughness meter is within 3 nm, or more preferably within 1 nm. Projection height measured by a feeler type roughness meter is within 0.1 $\mu$m, or more preferably within 0.06 $\mu$m.

To ensure better surface flatness and higher gas shut-off property, it is preferable to provide an undercoating layer on the surface of the flexible polymer support member. Because the magnetic layer is formed by the method such as sputtering, the undercoating layer preferably has high heat-resistant property. As the material of the undercoating layer, polyimide resin, polyamidemide resin, silicone resin, fluororesin, etc. may be used. It is more preferable to use thermosetting type polyimide resin, or thermosetting type silicone resin because better smoothening effect can be attained. The thickness of the undercoating layer is preferably in the range of 0.1 $\mu$m to 3.0 $\mu$m. When other resin film is laminated on the support member, the undercoating layer may be prepared before laminating, or the undercoating layer may be prepared after laminating.

As the thermosetting polyimide resin, a polyimide resin produced by thermal polymerization of imide monomer having two or more terminal unsaturated radicals in the molecule (for instance, bisarylnadiimide (BANI; manufactured by Maruzen Petrochemical Co., Ltd.) is preferably used. This imide monomer can be produced through thermal polymerization at relatively low temperature after it has been coated in the state of monomer on the surface of the support member. For this reason, the raw material, i.e. monomer, can be directly coated and hardened on the support member. Also, this imide monomer can be dissolved in a general-purpose organic solvent and used. It has high productivity and workability and has lower molecular weight and lower solution viscosity. Thus, it is resistant to distortion or warping caused by surface irregularities when coating, and it can provide high smoothening effect.

As the thermosetting silicone resin, a silicone resin produced through polymerization by sol-gel method using silicon compound with organic radical introduced in it may be optimally used. In this silicone resin, a part of the bond of silicon dioxide is substituted with an organic radical, and it has much higher heat-resistant property than silicone rubber and has higher flexibility than silicon dioxide film. Accordingly, when a resin film is formed on a polymer support member comprising flexible film, cracking or peeling hardly occurs. Also, a raw material monomer can be directly coated on the flexible polymer support member and can be hardened. The raw material, i.e. monomer, can be directly coated on the flexible polymer support member and can be hardened. As a result, a general-purpose solvent can be used. This makes it possible to prevent distortion or warping caused by surface irregularities and provides high smoothening effect. Further, condensation polymerization reaction occurs from relatively low temperature when a catalyst such as acid or chelating agent is added. Thus, it can be hardened within short time, and resin film can be formed by using a general-purpose coating apparatus.

The thermosetting silicone resin has high gas shut-off property. As a result, it can shut off the gas, which is generated from the flexible polymer support member during the formation of the magnetic layer or the primer layer and which impairs crystallization property and orientation of the magnetic layer or the primer layer, and it is suitable for this purpose.

On the surface of the undercoating layer, it is preferable to provide micro-projections (texture) in order to decrease actual contact area between the sliding members such as magnetic tape, guide pole, etc. and also to ensure the improvement of the sliding property. By providing micro-projections, the handling of the flexible polymer support member can be made much easier. To form the micro-projections, a method to coat spherical silica particles or a method to coat emulsion and to form projections of organic substance may be used. To maintain heat-resistant property of the undercoating layer, it is preferable to coat the spherical silica particles and to form micro-projections.

The height of the micro-projection is preferably in the range of 5 nm to 60 nm, or more preferably in the range of 10 nm to 30 nm. If the micro-projections are too high, signal recording and reproduction characteristics are decreased due to spacing loss of the recording and reproducing head and the magnetic recording medium. If the micro-projections are too low, the effect to improve the sliding property is decreased. The density of the micro-projections is preferably in the range of 0.1 to 100 projections/$\mu$m$^2$, or more preferably in the range of 1 to 10 projections/$\mu$m$^2$. If the density of the micro-projections is too low, the effect to improve the sliding property is decreased. If the density is too high, high projections are increased due to the increase of aggregated particles, and this leads to deterioration of the recording and reproducing characteristics.

The micro-projections can be fixed on the surface of the support member by using a binder. As the binder, it is preferable to use a resin with high heat-resistant property. As the resin with high heat-resistant property, it is preferable to use a solvent-soluble type polyimide resin, thermosetting type polyimide resin, or thermosetting type silicone resin.

It is preferable to provide a primer layer under the magnetic layer. As the material of the primer layer, Cr or an alloy of Cr with a metal element selected from Ti, Si, W, Ta, Zr, Mo, Nb, etc. or Ru, C, etc. may be used.

In particular, it is preferable that the magnetic layer is designed in column-like form by the primer layer. By producing the magnetic layer in form of column, separation structure between the ferromagnetic metals is stabilized. Higher coercive force can be obtained, and higher output can be achieved. The ferromagnetic metal can be more evenly distributed, and a magnetic recording medium with lower noise can be prepared.

These substances may be used alone or in combination of two or more. By the use of the primer layer, it is possible to improve orientation property of the magnetic layer, and recording characteristics can be improved. The thickness of the primer layer is preferably in the range of 10 nm to 200 nm, or more preferably in the range of 20 nm to 100 nm.

Further, to improve crystalline property of the primer layer, a seed layer may be provided between the primer layer and the flexible polymer support member. As the seed layer, Ta, Ta-Si, Ni-P, Ni-Al, etc. may be used.

When anisotropy of magnetization is set to vertical direction, a soft magnetic layer may be provided between the magnetic layer and the flexible polymer support member. By providing the soft magnetic layer, it is possible to have better electromagnetic transfer characteristics when a vertical recording head such as single magnetic pole head is used. As the soft magnetic material, Permalloy or Sendust may be used. Its thickness is preferably in the range of 30 nm to 500 nm.

A protective layer is arranged on the magnetic layer. The protective layer is provided to prevent corrosion of metal materials contained in the magnetic layer, to avoid wearing due to pseudo-contact or contact sliding between the magnetic head and the magnetic tape, and to ensure better running durability and higher corrosion-resistant property. As the protective layer, oxides such as silica, alumina, titania, zirconia, cobalt oxide, nickel oxide, etc., nitrides such as titanium nitride, silicon nitride, boron nitride, etc., carbides such as silicon carbide, chromium carbide, boron carbide, etc., carbon such as graphite, amorphous carbon, etc. may be used.

As the protective layer, it is preferable to use a hard film, which has hardness equal to or higher than the hardness of the magnetic head material and which is hardly subjected to seizure during sliding operation and has stable and continuous effect because such material can maintain good sliding durability. Also, the material with fewer pin holes is preferably used because it has higher corrosion-resistant property. As such protective film, a hard carbon film called "diamond-like carbon" (DLC) produced by CVD method is used. The protective layer may comprise two or more types of thin films having different property and laminated one upon another. For instance, a hard carbon protective film to improve the sliding characteristics may be provided on surface side, and a nitride protective film such as silicon nitride to improve corrosion-resistant property may be provided on the magnetic recording layer side. This makes it possible to provide both corrosion-resistant property and high durability.

On the protective layer, a lubricating layer is provided to ensure high running durability and good corrosion-resistant property. As the lubricant, hydrocarbon type lubricant, fluorine type lubricant, extreme-pressure additive, etc. as already known in the art may be used.

As the hydrocarbon type lubricant, carboxylic acids such as stearic acid, oleic acid, etc., esters such as butyl stearate, sulfonic acids such as octadecyl sulfonic acid, phosphoric acid esters such as monooctadecyl phosphate, alcohols such as stearyl alcohol, oleyl alcohol, etc., carboxylic acid amide such as stearic acid amide, etc., or amines such as stearyl amine may be used.

As the fluorine type lubricant, a lubricant prepared by substituting a part or all of the alkyl groups in the hydrocarbon type lubricant by fluoroalkyl group or perfluoropolyether group may be used. As the perfluoropolyether group, perfluoromethylene oxide polymer, perfluoroethylene oxide polymer, perfluoro-n-propylene oxide polymer $(CF_2CF_2CF_2O)_n$, perfluoroisopropylene oxide polymer $(CF(CF_3)CF_2O)_n$ or copolymer of these compounds may be used.

More concretely, perfluoromethylene-perfluoroethylene copolymer (Trade name: Fomblin Z-Dol; manufactured by Ausimont Co., Ltd.) having hydroxyl group at the molecular weight terminal may be used.

As the extreme-pressure additive, phosphoric acid esters such as trilauryl phosphate, phosphorous acid esters such as trilauryl phosphite, thiophosphorous acid esters such as trilauryl trithiophosphite, sulfur type extreme-pressure agent such as dibenzyl disulfide may be used.

The above lubricants may be used alone or in combination of two or more. A solution obtained by dissolving the lubricant in organic solvent may be coated on the surface of the protective layer by spin coating method, wire bar coating method, gravure coating method, dip coating method, etc. or the lubricant may be attached on the surface of the protective layer by vacuum deposition method. The amount of coating of the lubricant is preferably in the range of 1 to 30 mg/m$^2$, or more preferably in-the range of 2 to 20 mg/m$^2$.

To have higher corrosion-resistant property, it is preferable to use a rust-preventive agent simultaneously. As the rust-preventive agent to be used in the present invention, nitrogen-containing heterocyclic compounds such as benzotriazole, benzimidazole, purine, pyrimidine, etc., derivatives prepared by introducing alkyl side-chain to the base nucleus, nitrogen- or sulfur-containing hetero-cyclic compounds and derivatives such as benzothiazole, 2-mercaptobenzothiazole, tetrazaindene cyclic compound, or thiouracil compound may be used. These rust-preventive agents may be mixed with the lubricant and coated on the protective layer. Or, it may coated on the protective layer before the coating of the lubricant, and then, the lubricant may be coated on it. The amount of coating of the rust-preventive agent is preferably in the range of 0.1 to 10 mg/m$^2$, or more preferably in the range of 0.5 to 5 mg/m$^2$.

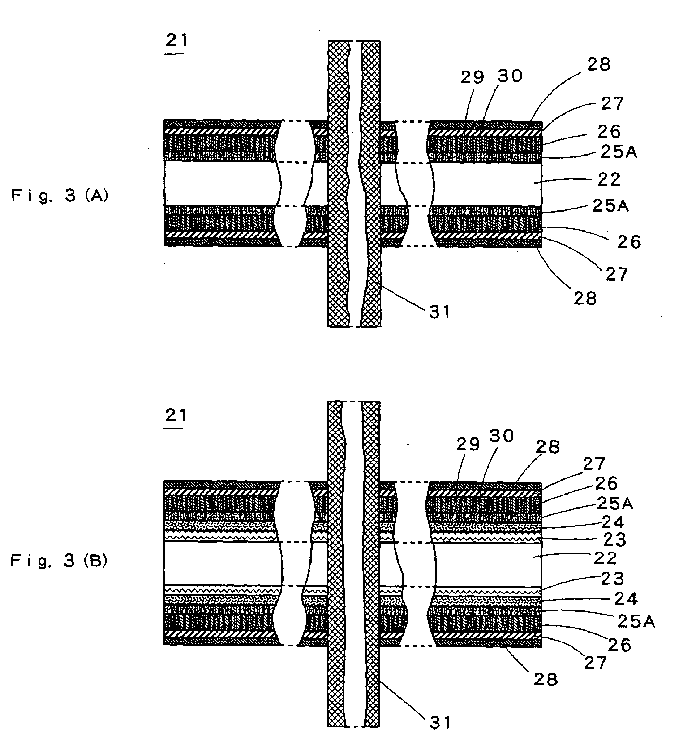

Fig. 3 represents cross-sectional views, each showing another embodiment of the present invention.

Fig. 3 (A) is a drawing to explain a case where the magnetic recording medium is a flexible disk.

In a flexible disk 21, a chromium-containing primer layer 25A is provided on each of the surfaces of the flexible polymer support member 22. On each of the chromium-containing primer layers 25A, a magnetic layer 26 is formed. The magnetic layer 26 comprises a ferromagnetic metal alloy 29 at least containing cobalt, platinum and chromium and a nonmagnetic material 30. On the magnetic layer 26, a protective layer 27 is formed which prevents deterioration of the magnetic layer due to oxidation and protects from wearing caused by the contact with the head or the sliding member. On the protective layer 27, a lubricating layer 28 is arranged for the purpose of improving running durability and corrosion-resistant property. Also, at the center of the disk, engaging means 31 for engaging with the flexible disk drive is arranged.

In the magnetic recording medium shown in Fig. 3 (B), an undercoating layer 23 is provided on each of the surfaces of the flexible polymer support member. These undercoating layers 23 adjust surface property of the flexible polymer support member 22 and prevent a gas generated from the flexible polymer support member 22 from reaching the chromium-containing primer layer 25A or the magnetic layer 26. Further, seed layers 24 are provided to control crystal orientation of the chromium-containing primer layer 25.

Compared with the disk shown in Fig. 3 (A), the disk shown in Fig. 3 (B) is provided with the seed layers 24. These seed layers have effects to adjust crystal orientation of the primer layer. As a result, the ferromagnetic metal formed on the primer layer can have better crystal orientation, and a magnetic layer with better magnetic characteristics can be obtained.

The flexible disk of the present invention is used in such manner that it is mounted on a synthetic resin cartridge with an access window for the head when it is installed in an equipment.

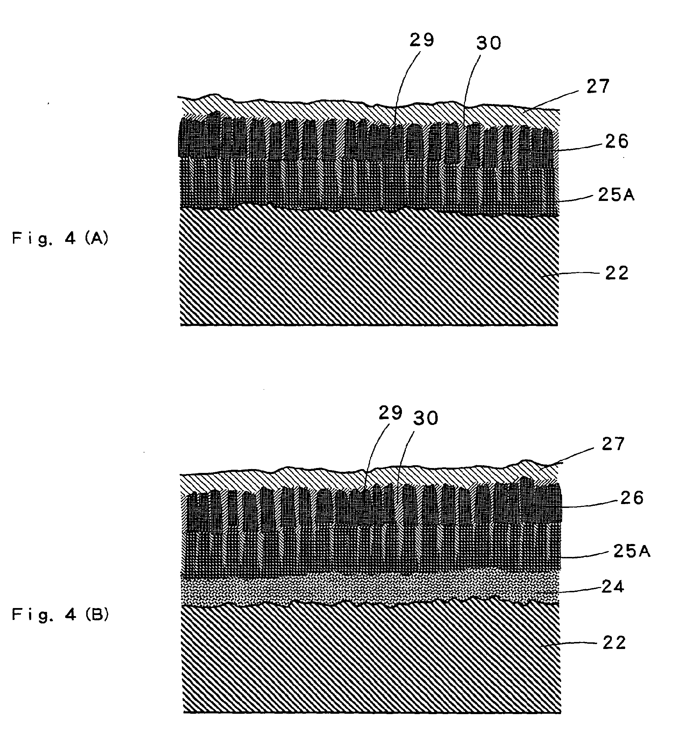

Fig. 4 represents cross-sectional views, each showing a magnetic layer of the magnetic recording medium shown in Fig. 3.

As shown in Fig. 4 (A), a chromium-containing primer layer 25A is provided on a nonmagnetic support member, which comprises a flexible polymer support member 22, and a magnetic layer 26 is formed on the chromium-containing primer layer 25A. The magnetic layer 26 comprises a ferromagnetic metal alloy 29 containing at least cobalt, platinum and chromium, and a nonmagnetic material 30. The ferromagnetic metal alloy 29 and the nonmagnetic material 30 appear to be mixed together. However, the ferromagnetic metal alloy 29 shown in the figure is a portion where the content of the ferromagnetic metal alloy is relatively higher compared with the entire composition, and the nonmagnetic material 30 is a portion where the content of the nonmagnetic material is relatively higher compared with the entire composition. The portions where the content of the ferromagnetic metal alloy is higher are positioned with a spacing of 0.01 nm to 10 nm from each other.

In the present invention, it is desirable that crystal growth occurs by reflecting crystal orientation of the chromium-containing primer layer 25A, and the magnetic layer 26 is formed in column-like structure as shown in Fig. 4. By designing in such structure, the portions abundant with the magnetic metal alloy are separated from the portions abundant with the nonmagnetic material in stable manner, and high coercive force can be achieved. The amount of magnetization is increased in the portions abundant with ferromagnetic metal alloy, and this leads to higher output. Further, the portions abundant with the ferromagnetic metal alloy are dispersed evenly, and this contributes to the reduction of noise.

As the material of the chromium-containing primer layer, for the purpose of controlling the crystal orientation of the magnetic layer, i.e. for the purpose of controlling lattice constant and of improving close adhesion, at least one type is selected from the group of Be, Mg, Al, Si, P, S, Ca, Sc, Ti, V, Mn, Fe, Co, Ni, Cu, Zn, Ga, Ge, As, Se, Rb, Sr, Y, Zr, Nb, Mo, Ru, Rh, Pd, Ag, In, Sb, Te, Cs, Ba, Hf, Ta, W, Re, Os, Ir, Pt, Tl, Pb, and Bi.

Among these, it is preferable to use a chromium-containing alloy, which contains at least one type of element selected from a group of Co, Be, Os, Re, Ti, Zn, Ta, Al, Mo, W, V, Fe, Sb, Ir, Ru, Rh, Pt, Pd, Si and Zr. From the viewpoint of control of lattice constant and of improvement of close adhesion, it is preferable to use Ti, Be, Ru, Si, or Zr.

By the use of these primer layers, the magnetic layer can have better orientation property, and this contributes to the improvement of recording characteristics.

In the chromium alloy of the primer layer, mixing ratio of chromium with other elements is preferably in the following range: Chromium to other elements = 99:1 to 70:30 (atom ratio), or more preferably in the range of 95:5 to 80:20. When the ratio of chromium is higher or lower than the above range, it is difficult to control crystal orientation of the magnetic layer, and magnetic characteristics are decreased.

The thickness of the primer layer comprising chromium alloy is preferably in the range of 10 nm to 200 nm, or more preferably in the range of 10 nm to 100 nm. If it is thicker than this range, productivity is decreased. Crystal size is increased and this leads to the increase of noise when the recording information is read. On the contrary, if it is thinner, the improvement of the magnetic characteristics due to the effect of the primer layer cannot be attained.

As the methods to form the chromium-containing primer layer, vacuum film-forming method such as vacuum deposition method, sputtering method, etc. may be used. Above all, the sputtering method is useful in forming ultra-thin film of good quality in easy manner, and it is suitable for the present invention. As the sputtering method, DC sputtering method or RF sputtering method may be used. For the sputtering method, a web sputtering apparatus for continuously forming the film on a continuous film is suitable in case of a flexible disk, which uses a flexible polymer film as a support member.

When the chromium-containing primer layer is formed by sputtering, argon can be used as a sputtering gas, while other type of rare gas may also be used. Also, a slight quantity of oxygen gas may be introduced for the purpose of controlling the lattice constant of the primer layer.

To form the chromium-containing primer layer by the sputtering method, both chromium target and other element target can be used and co-sputtering method may be adopted, while, for the purpose of precisely controlling the lattice constant and of producing uniform film, it is preferable to use chromium alloy target, which comprises chromium and other element. This alloy target can be prepared by means such as hot press method.

For the purpose of improving adhesiveness and to improve crystal orientation property between the primer layer and the flexible polymer support member, it is preferable to provide a seed layer. As the seed layer, it is preferable to use Ta, Ta-Si, Ta-Al, Ta-C, Ta-W, Ta-Ti, Ta-N, Ta-Ni, Ta-O, Ta-P, Ni-P, Ni-Al, Ni-C, Ni-Ti, Ni-W, Ni-Si, Ni-N, Ni-O, Ti-W, Ti-C, Ti-N, Ti-Si, Ti-O, Ti-P, Al-Ti, Mg-O, Mg-W, Mg-C, Mg-N, Mg-Ti, Mg-Ni, Mg-Al, Mg-Si, Mg-P, Zn-Si, Zn-Al, Zn-C, Zn-W, Zn-Ti, Zn-N, Zn-Ni, Zn-O, Zn-P, etc. Above all, it is preferable to use Ta, Ta-Si, Ta-C, Ni-P, Ni-Al, Ti-W, Ti-C, Mg-O, Zn-Si, etc. for the purpose of improving the adhesiveness and to have better crystal orientation property.

To form the seed layer, vacuum film-forming method such as vacuum deposition method, sputtering method, etc. may be used. Above all, the sputtering method is useful in forming ultra-thin film with good quality.

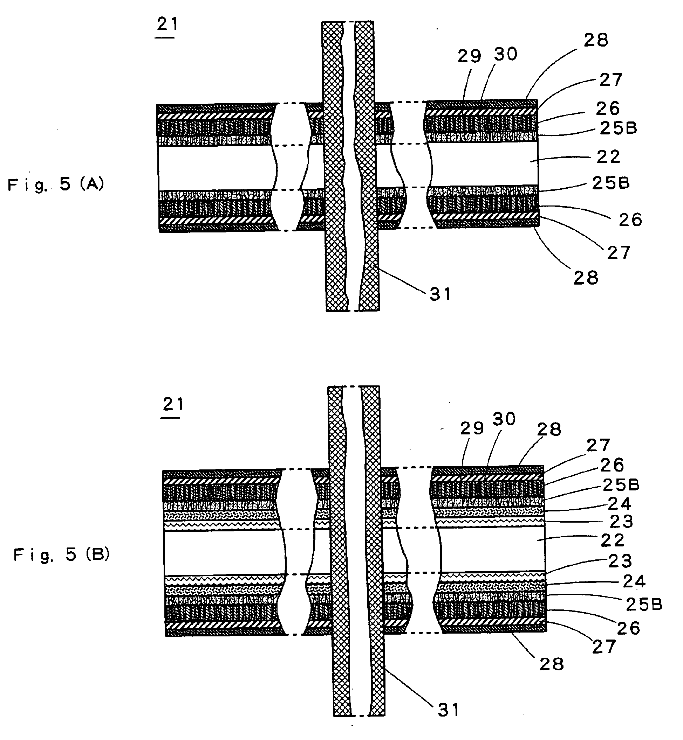

Fig. 5 represents cross-sectional views, each showing still another embodiment of the present invention.

Fig. 5 (A) is a drawing to explain a case where the magnetic recording medium is a flexible disk.

In a flexible disk 21, a ruthenium-containing primer layer 25B is arranged on each of the surfaces of a flexible polymer support member 22, and a magnetic layer 26 is arranged on each of the ruthenium-containing primer layers 25B. The magnetic layer 26 comprises a ferromagnetic metal alloy 29 containing at least cobalt, platinum and chromium, and a nonmagnetic material 30. On each of the magnetic layers 26, a protective layer 27 is formed, which prevents deterioration of the magnetic layer due to oxidation and protects from wearing caused by the contact with the head or the sliding member. Also, a lubricating layer 28 is provided on the protective layer 27 for the purpose of improving running durability and corrosion-resistant property. At the center of the disk, engaging means 31 for engaging with a flexible disk drive is arranged.

In the magnetic recording medium shown in Fig. 5 (B), an undercoating layer 23 is provided on each of the surfaces of the flexible polymer support member 22, and the undercoating layer is used to adjust surface property of the flexible polymer support member 22 and to prevent the gas generated from the flexible polymer support member 22 from reaching the ruthenium-containing primer layer 25B or the magnetic layer 26. Further, a seed layer 24 is provided, which controls crystal orientation property of the ruthenium-containing primer layer 25B.

Compared with the disk shown in Fig. 5 (A), the disk shown in Fig. 5 (B) has the seed layer. This is useful in adjusting crystal orientation property of the ruthenium-containing primer layer. This is helpful in attaining the better crystal orientation property of the ferromagnetic metal formed on the primer layer, and a magnetic layer with the better magnetic characteristics can be obtained.

Also, the flexible disk of the present invention is used by mounting in a synthetic resin cartridge with an access window for the head when it is installed in an equipment.

When ruthenium is used, crystal orientation can be easily attained in film formation at room temperature. By using the ruthenium primer layer, crystal orientation of the magnetic layer can be controlled even when the film is formed at room temperature. This is reported by Ohmori et al. in the Journal of the Japan Society of Applied Magnetic Science Vol. 25, pp.607-610 (2001). In fact, however, there is difference between lattice constant of ruthenium and that of cobalt, and it is not optimal from the viewpoint of the improvement of recording characteristics of the magnetic layer. Also, ruthenium has very high film stress and it has poor adhesiveness with the substrate. For this reason, it is necessary to provide one more adhesive layer under the primer layer. Further, it was found that, when the flexible polymer support member was used, the substrate was deformed due to film stress.

Under such circumstances, there have been strong demands on the formation of a primer layer, which has lower film stress and makes it possible to control crystal orientation of the magnetic layer when the film is formed at room temperature and to improve recording characteristics of the magnetic layer. The ruthenium-containing primer layer of the present invention contains other elements together with ruthenium, and it is possible to improve recording characteristics by the control of the crystal orientation of the magnetic layer even when the film is formed at room temperature. Also, it was found that film stress was lower than ruthenium.

By the use of the ruthenium-containing primer layer and the ferromagnetic metal thin film, there is no need any more to heat the substrate as in the past, and it is possible to attain good magnetic characteristics even when substrate temperature is at room temperature. In this respect, even when the support member is made of polymer film, no thermal damage occurs. Thus, it is possible to provide a flat flexible disk without possibility of deformation.

The magnetic layer may be the so-called vertical magnetic recording film having an axis of easy magnetization in vertical direction with respect to the disk surface, or it may be an in-plane magnetic recording film now widely used in hard disk. The direction of the axis of easy magnetization can be controlled by the material and crystal structure of the ruthenium-containing primer layer and by composition and film-forming condition of the magnetic film.

The magnetic layer used in the magnetic recording medium of the present invention is a magnetic layer, which comprises a ferromagnetic metal alloy containing cobalt, platinum and chromium, and a nonmagnetic material.

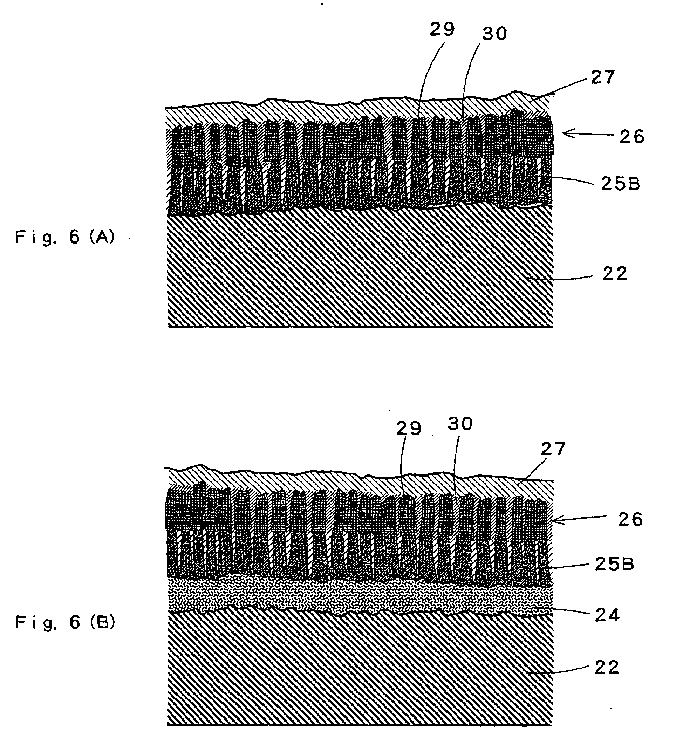

Fig. 6 represents cross-sectional views, each showing a magnetic layer of the magnetic recording medium shown in Fig. 5.

In Fig. 6 (A), a magnetic layer 26 is formed on a ruthenium-containing primer layer 25B on a nonmagnetic support member, which comprises a flexible polymer support member 22.

The magnetic layer 26 comprises a ferromagnetic metal alloy 29 containing at least cobalt, platinum and chromium, and a nonmagnetic material 30. The ferromagnetic metal alloy 29 and the nonmagnetic material 30 appear to be mixed together. However, the ferromagnetic metal alloy 29 as shown in the figure represents portions where the content of the ferromagnetic metal alloy is higher compared with the entire composition. The nonmagnetic material 30 represents portions where the content of the nonmagnetic material is higher compared with the entire composition.

Also, the portions where the content of the ferromagnetic metal alloy is higher are positioned with a spacing of 0.01 nm to 10 nm from each other.

It is desirable that crystal growth occurs by reflecting the crystal orientation of the ruthenium-containing primer layer 25B, and the magnetic layer 26 is formed in column-like structure as shown in Fig. 6 (B). By designing in such structure, portions abundant with the ferromagnetic metal alloy and the portions abundant with the nonmagnetic material can be separated from each other in stable manner, and high coercive force can be maintained. Because the amount of magnetization is increased in the portions abundant with the ferromagnetic metal alloy, high output can be achieved. Moreover, the portions abundant with the ferromagnetic metal alloy are dispersed evenly and the noise is decreased.

In the following, description will be given on a method to prepare the magnetic recording medium using the flexible polymer support member.

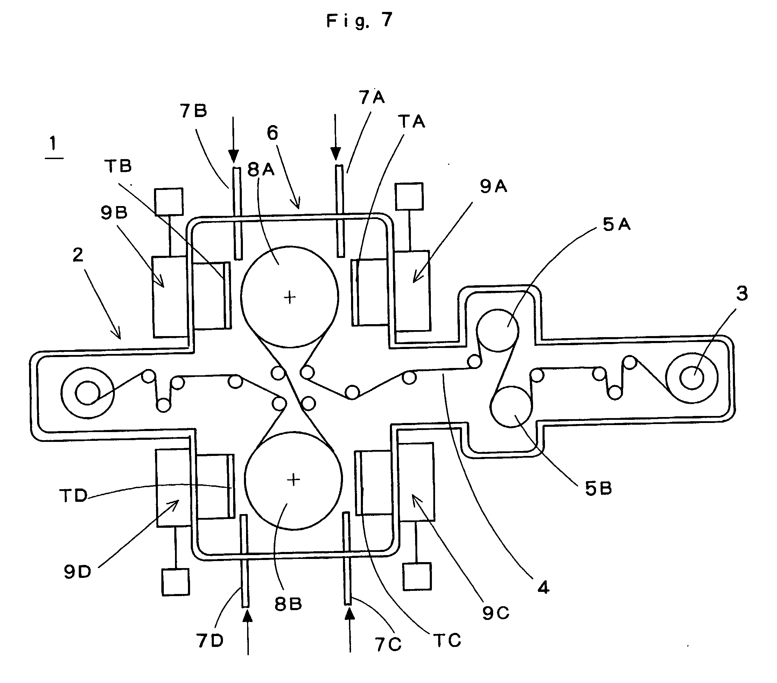

Fig. 7 is a schematical drawing to explain a method to form a magnetic layer on a flexible polymer support member.

A film-forming apparatus 1 comprises a vacuum chamber 2. A flexible polymer support member 4 unwound from an unwinding roll 3 is adjusted of its tension by tension adjusting rolls 5A and 5B, and it is sent to a film-forming chamber 6.

In the film-forming chamber 6, argon is supplied at a predetermined flow rate from a sputtering gas supply pipe 7A - 7D under reduced pressure set by a vacuum pump. The flexible polymer support member 4 is wound closely fitted on a film-forming roll 8A in the film-forming chamber 6. From a target TA of a primer layer sputtering apparatus 9A, atoms for forming the primer layer are ejected and a film is formed on the flexible polymer support member.

Next, on the film-forming roll 8A, atoms for forming the magnetic layer are ejected from a target TB, which is mounted on a magnetic layer sputtering apparatus 9B and in which the ferromagnetic metal alloy and nonmagnetic oxide are uniformly dispersed. The atoms are ejected to the primer layer, and a magnetic layer is formed on the primer layer.

Next, the surface with the magnetic layer formed on it is wound closely fitted on the film-forming roll 8B and, while moving, atoms for forming the primer layer are ejected from a target TC of a primer layer sputtering apparatus 9C, and a film is formed on a surface opposite to the surface of the flexible polymer support member where the magnetic layer has been formed. Further, on a film-forming roll 8B, atoms for forming the magnetic layer are ejected from a target TD, which is mounted on a magnetic layer sputtering apparatus 9D and in which the ferromagnetic metal alloy and the nonmagnetic oxides are uniformly dispersed, and a magnetic layer is formed on the primer layer.

By the process as described above, the magnetic layers are formed on both surfaces of the flexible polymer support member, and these magnetic layers are wound up on a winding roll 10.

In the above, description has been given on a method to form magnetic layers on both surfaces of the flexible polymer support member, while it is also possible to form the magnetic layer only on one surface by similar method.

After the magnetic layers have been formed, a protective layer comprising the diamond-like carbon is formed on the magnetic layer by CVD method.

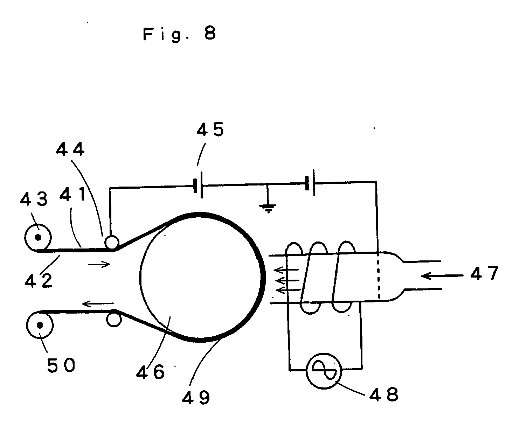

Fig. 8 is a schematical drawing to explain an example of a CVD apparatus, which uses high frequency plasma and is applicable in the present invention.

A flexible polymer support member 42 with the magnetic layer 41 formed on it is unwound from a roll 43. Bias voltage is supplied from a bias power source 45 via a pass roller 44 to the magnetic layer 41, and the support member is sent as it is wound up on a film-forming roll 46.

On the other hand, a raw material gas 47 containing hydrocarbon, nitrogen, rare gas, etc. is sent, and by the plasma generated by the voltage applied from a high frequency power source 48, a carbon protective film 49 containing nitrogen and rare gas is formed on a metal thin film on the film-forming roll 46, and the carbon protective film is wound up on a winding roll 50. Through purification of the surface of the magnetic film by flow processing using rare gas or hydrogen gas prior to the preparation of the carbon protective film, higher adhesion can be maintained. By forming a silicon intermediate layer on the surface of the magnetic layer, the higher adhesion can be obtained.

Description will be given below on Examples and Comparative examples to explain the present invention.

(Preparation of the magnetic tape)

(Example 1-1)

On a polyethylene terephthalate film of 6.3 $\mu$m in thickness and with surface roughness Ra = 1.2 nm, an undercoating solution containing 3-glycidoxypropyltrimethoxysilane, phenyltriethoxysilane, hydrochloric acid, aluminum acetylacetonate, and ethanol was coated by gravure coating method. Then, this was dried and hardened at 100°C, and an undercoating layer comprising silicone resin of 0.2 $\mu$m in thickness was prepared.

On the undercoating layer thus obtained, a coating solution containing silica sol of 25 nm in particle size and the undercoating solution were coated by gravure coating method. Projections of 15 nm in height were formed on the undercoating layer in density of 10 projection/$\mu$m$^2$, and this was regarded as an original material for the magnetic tape.

Next, this original material for the magnetic tape was mounted on a web sputtering apparatus shown in Fig. 7, and this was transported while the film was closely fitted on a water-cooled film-forming roll. On the undercoating layer, a primer layer comprising Cr:Ti = 80:20 (atom ratio) was formed in thickness of 30 nm by DC magnetron sputtering method. Next, a magnetic layer with composition of CoPtCr alloy (Co:Pt:Cr = 70:20:10 (atom ratio):SiO$_2$ = 88:12 (atom ratio) was formed in thickness of 25 nm.

Next, the original material with the magnetic layer formed on it was mounted on a web type CVD apparatus as shown in Fig. 8. By RF plasma CVD method using ethylene gas, nitrogen gas and argon gas as reaction gas, a nitrogen-added diamond-like carbon (DLC) protective film with composition of C:H:N = 62:29:7 (mol ratio) was formed in thickness of 10 nm. In this case, bias voltage of -400 V was applied on the magnetic layer.

Next, on a surface of the flexible polymer support member opposite to the surface where the magnetic layer was formed, carbon black, calcium carbonate, stearic acid, nitrocellulose, polyurethane, and isocyanate hardening agent were dissolved and dispersed in methyl ethyl ketone to prepare a back-coating solution. Then, the back-coating solution was coated by wire bar coating method. This was dried at 100°C and a back-coating layer of 0.5 $\mu$m in thickness was prepared.

Further, perfluoropolyether lubricant (Fomblin Z-Dol; manufactured by Ausimont Co., Ltd.) having hydroxyl group at molecular terminal was dissolved in a fluorine type solvent (HFE-7200; Manufactured by Sumitomo 3M Co., Ltd.), and this solution was coated on the surface of the protective layer by gravure coating method, and a lubricating layer of 1 nm in thickness was prepared.

The original material for the magnetic tape thus prepared was cut off to have a width of 8 mm, and the surface was polished. Then, this was mounted on a cartridge for 8-mm video cassette, and a magnetic tape was prepared.

On the magnetic tape, characteristics were evaluated by the evaluation method 1 as given below. The results are shown in Table 1.

(Comparative example 1-1)

A magnetic tape was prepared by the same procedure as in Example 1-1 except that the composition of the magnetic layer was set to Co:Pt:Cr = 70:20:10. This was evaluated by the same procedure as in Example 1-1. The results are shown in Table 1.

(Comparative example 1-2)

A magnetic tape was prepared by the same procedure as in Example 1-1 except that temperature of the film-forming roll during the formation of the primer layer and the magnetic layer was set to 150°C. This was evaluated by the same procedure as in Example 1-1. The results are shown in Table 1.

(Evaluation method 1)

1. Magnetic characteristics

Coercive force Hc was determined using a specimen vibration type magnetometer (VSM), and this was defined as magnetic characteristics.

2. Cupping amount

The magnetic tape was cut off to have a length of 100 mm. This was placed on a smooth glass plate, and tape width was measured. Deformation in width direction of the tape was defined as cupping amount.

3. C/N

Using an MR head with reproduction track width of 2.2 $\mu$m and reproduction gap of 0.26 $\mu$m, recording and reproduction were performed with linear recording density of 130 kFCI, and reproduction signal/noise (C/N) ratio was determined. In this case, relative speed of tape/head was set to 10 m/sec., and head weighting was set to 29.4 mN (3 gf).

4. Durability

Still reproduction was performed using a 8-mm video tape recorder. Still reproduction time up to the moment when the output reached the initial value - 3dB was defined as durability time. Measurement was performed under the conditions of 23°C and 10 relative humidity. The test was carried out up to 24 hours at maximum.

Table 1

|  | Hc (kA/m) | Cupping (mm) | C/N (dB) | Durability time (h) |
|---|---|---|---|---|
| Example 1-1 | 199 | 7.9 | 0 | >24 |
| Comparative example 1-1 | 119 | 7.9 | -5.9 | >24 |
| Comparative example 1-2 | 183 | 6.8 | Not measurable | 0.1 |

From the results shown in the above table, it is evident that the magnetic tape of the present invention has good quality in both recording characteristics and durability. On the other hand, the magnetic tape of Comparative example 1-1, which does not contain nonmagnetic oxide in the magnetic layer exhibited lower coercive force (Hc) and poor recording characteristics. Further, in Comparative example 1-2 prepared at high film-forming temperature for the primer layer and the magnetic layer, the coercive force was improved, but the film of the flexible polymer support member was deformed by heat, and durability was extremely decreased. When the surface of the tape was examined under microscope, small cracks were observed on the magnetic layer.

(Preparation of flexible disk)

(Example 2-1)

On a polyethylene terephthalate film of 6.3 $\mu$m in thickness and with surface roughness Ra = 1.4 nm, an undercoating solution containing 3-glycidoxypropyltrimethoxysilane, phenyltriethoxysilane, hydrochloric acid, aluminum acetylacetonate, and ethanol was coated by gravure coating method. Then, this was dried and hardened at 100°C, and an undercoating layer comprising silicone resin of 1.0 $\mu$m in thickness was prepared.
On the undercoating layer thus obtained, a coating solution containing silica sol of 25 nm in particle size and the undercoating solution were coated by gravure coating method. Projections of 15 nm in height were formed on the undercoating layer in density of 10 projection/$\mu$m$^2$. This undercoating layer was formed on each of both surfaces of the flexible polymer support member film. The flexible polymer support member film thus obtained was regarded as the original film and was mounted on a sputtering apparatus.
Next, this original material for the magnetic tape was mounted on a web sputtering apparatus shown in Fig. 7, and this was transported while the film was closely fitted on a water-cooled film-forming roll. On the undercoating layer, a primer layer comprising Cr:Ti = 80:20 (atom ratio) was formed in thickness of 30 nm by DC magnetron sputtering method. Next, a magnetic layer with composition of CoPtCr alloy (Co:Pt:Cr = 70:20:10 (atom ratio):SiO$_2$ = 88:12 (atom ratio) was formed in thickness of 25 nm.
The primer layer and the magnetic layer were formed on both surfaces of the film. Next, the original material with the magnetic layer formed on it was mounted on a web type CVD apparatus as shown in Fig. 8. By RF plasma CVD method using ethylene gas, nitrogen gas and argon gas as reaction gas, a nitrogen-added diamond-like carbon (DLC) protective film with composition of C:H:N = 62:29:7 (mol ratio) was formed in thickness of 10 nm. In this case, bias voltage of -400 V was applied on the magnetic layer. The protective layer was also formed on both surfaces of the film.
Further, perfluoropolyether lubricant (Fomblin Z-Dol; manufactured by Montefluos Co., Ltd.) having hydroxyl group at molecular terminal was dissolved in a fluorine type solvent (HFE-7200; Manufactured by Sumitomo 3M Co.,

Ltd.), and this solution was coated on the surface of the protective layer by gravure coating method, and a lubricating layer of 1 nm in thickness was prepared.

From the original material thus obtained, a piece in form of a disk with diameter of 94 mm was punched out. After this was polished, it was engaged in a synthetic resin cartridge for flexible disk (for Zip 100; manufactured by Fuji Photo Film Co., Ltd.), and a flexible disk was prepared.

On the flexible disk thus obtained, characteristics were evaluated by the evaluation method 2 as given below. The results are shown in Table 2.

(Example 2-2)

From the original material with the undercoating layer formed on it in Example 2-1, a disk-like sheet of 130 mm in diameter was punched out, and this was fixed on a circular ring. Using a batch type sputtering apparatus, a primer layer and a magnetic layer with the same compositions as in Example 2-1 were formed on both surfaces of the sheet, and a protective film was also formed using CVD apparatus. On this sheet, the same lubricating layer as in Example 2-1 was formed by dip coating method. Next, a piece in form of a disk of 94 mm in diameter was punched out from this sheet. After polishing with tape, this was engaged on a synthetic resin cartridge for flexible disk (for zip 100; Fuji Photo Film Co., Ltd.), and a flexible disk was prepared.

On the flexible disk thus prepared, characteristics were evaluated by the evaluation method 2 as given below. The results are shown in Table 2.

(Reference example 2-1)

A hard disk was prepared by the same procedure as in Example 2-2 except that a glass substrate of 94 mm in diameter with the mirror-polished surface was used as a substrate. However, the undercoating layer was not formed, and it was not engaged on a cartridge.

On the hard disk thus obtained, characteristics were evaluated by the evaluation method 2 as given below. The results are shown in Table 2.

(Comparative example 2-1)

A flexible disk was prepared by the same procedure as in Example 2-1 except that composition of the magnetic layer was set to Co:Pt:Cr = 70:20:10 (atom ratio). On the flexible disk thus obtained, characteristics were evaluated by the evaluation method 2 as given below. The results are shown in Table 2.

(Comparative example 2-2)

A flexible disk was prepared by the same procedure as in Comparative example 2-1 except that film-forming temperature during formation of the primer layer and the magnetic layer was set to 150°C.

On the flexible disk thus prepared, characteristics were evaluated by the evaluation method 2 as given below. The results are shown in Table 2.

(Evaluation method 2)

1. Magnetic characteristics

Coercive force (Hc) was determined using a specimen vibration type magnetometer (VSM), and this was defined as magnetic characteristics.

2. Surface deviation

The flexible disk and the hard disk were rotated at 3000 rpm, and surface deviation at a position of 35 mm in radial direction from the center was measured using a laser displacement gauge.

3. C/N

Using an MR head with reproduction width of 2.2 $\mu$m and reproduction gap of 0.26 $\mu$m, recording and reproduction were performed with linear recording density of 130 kFCI, and reproduction signal/noise (C/N) was measured. In this case, number of revolutions was set to 3000 rpm, and the head was set at 35 mm in radial direction. Head weighting was set to 29.4 mN (3 gf).

4. Modulation

Reproduction output at the time of C/N measurement was determined for one turn of the disk. The ratio of the minimum value of the output to the maximum value was expressed in %.

5. Durability

Except the hard disk, the flexible disk was engaged on a drive for flexible disk (Drive for Zip 100; manufactured by Fuji Photo Film Co., Ltd.), and this was run while recording and reproduction were carried out repeatedly. Running was stopped at the moment when the output value reached the initial value - 3dB, and this was defined as durability type. The conditions for the measurement was 23°C and 50% relative humidity, and the test was carried out up to 300 hours at maximum.

Table 2

|  | HC (kA/m) | Surface deviation ($\mu$m) | C/N (dB) | Modulation (%) | Durability time (h) |
|---|---|---|---|---|---|
| Example 2-1 | 199 | 25 | 0 | 95 | >300 |
| Example 2-2 | 207 | 30 | +0.5 | 92 | >300 |
| Reference example 2-1 | 207 | 10 | -1.2 | 97 | - |
| Comparative example 2-1 | 119 | 30 | -6.2 | 94 | >300 |
| Comparative example 2-2 | 183 | 75 | -2.5 | 78 | 13 |

As it is evident from the results of Examples and Comparative examples shown in the above table, the flexible disk of the present invention has good quality in both recording characteristics and durability. On the other hand, in Reference example 2-1 where glass substrate was used as substrate, the value of C/N was somewhat lower compared with the flexible disk of Example 2-1 prepared by the same procedure. This is because the output was relatively lower and because floating amount of the head was higher in the hard disk than in the flexible disk.

In Comparative example 2-1 where nonmagnetic oxide ($SiO_2$) was not used in the magnetic layer, coercive force was lower and recording characteristics were poor. Further, in Comparative example 2-2 where film-forming temperature for formation of the primer layer and the magnetic layer was higher, coercive force was improved, but the flexible polymer support member film was deformed by heat, and surface deviation and durability were aggravated.

(Example 3-1)

On a polyethylene terephthalate film of 6.3 $\mu$m in thickness and with surface roughness Ra = 1.4 nm, an undercoating solution containing 3-glycidoxypropyltrimethoxysilane, phenyltriethoxysilane, hydrochloric acid, aluminum acetylacetonate, and ethanol was coated by gravure coating method. Then, this was dried and hardened at 100°C, and an undercoating layer comprising silicone resin of 1.0 $\mu$m in thickness was prepared.

On the undercoating layer thus obtained, a coating solution containing silica sol of 25 nm in particle size and the undercoating solution were coated by gravure coating method. Projections of 15 nm in height were formed on the undercoating layer in density of 10 projections/$\mu$m$^2$. Also, the undercoating layer was formed on both surfaces of the flexible polymer support member film. The flexible polymer support member thus obtained was used as the original material, and this was mounted on a sputtering apparatus.

Next, this original material for the magnetic tape was mounted on a web sputtering apparatus shown in Fig. 7, and this was transported while the film was closely fitted on a water-cooled film-forming roll. On the undercoating layer, a primer layer comprising Cr:Ti = 80:20 (atom ratio) was formed in thickness of 30 nm by DC magnetron sputtering method. Next, a magnetic layer with composition of CoPtCr alloy (Co:Pt:Cr = 70:20:10 (atom ratio):$SiO_2$ = 88:12 (atom ratio) was formed in thickness of 25 nm.

The primer layer and the magnetic layer were formed each on both surfaces of the film. Next, the original material with the magnetic layer formed on it was mounted on a web type CVD apparatus as shown in Fig. 8. By RF plasma CVD method using ethylene gas, nitrogen gas and argon gas as reaction gas, a nitrogen-added diamond-like carbon (DLC) protective film with composition of C:H:N = 62:29:7 (mol ratio) was formed in thickness of 10 nm. In this case, bias voltage of -400 V was applied on the magnetic layer. The protective layer was also formed on both surfaces of the film.

Further, perfluoropolyether lubricant (Fomblin Z-Dol; manufactured by Ausimont Co., Ltd.) having hydroxyl group at molecular terminal was dissolved in a fluorine type solvent (HFE-7200; Manufactured by Sumitomo 3M Co., Ltd.), and this solution was coated on the surface of the protective layer by gravure coating method, and a lubricating layer of 1 nm in thickness was prepared.

From the original material thus obtained, a piece in form of a disk with diameter of 94 mm was punched out. After this was polished, it was engaged in a synthetic resin cartridge for flexible disk (for Zip 100; manufactured by Fuji Photo Film Co., Ltd.), and a flexible disk was prepared.

On the flexible disk thus obtained, characteristics were evaluated by the evaluation method 2 as given below. The results are shown in Table 4.

(Example 3-2)

From the original material with the undercoating layer formed on it in Example 3-1, a disk-like sheet of 130 mm in diameter was punched out, and this was fixed on a circular ring. Using a batch type sputtering apparatus, a primer layer and a magnetic layer with the same compositions as in Example 3-1 were formed on both surfaces of the sheet, and a protective film was also formed using CVD apparatus. On this sheet, the same lubricating layer as in Example 2-1 was formed by dip coating method. Next, a piece in form of a disk of 94 mm in diameter was punched out from this sheet. After polishing with tape, this was engaged on a synthetic resin cartridge for flexible disk (for zip 100; Fuji Photo Film Co., Ltd.), and a flexible disk was prepared.

On the flexible disk thus prepared, characteristics were evaluated by the evaluation method 2 as given below. The results are shown in Table 4.

(Examples 3-3 to 3-25)

A flexible disk was prepared by the same procedure as in Example 3-1 except that composition and thickness of the primer layer were set to the values shown in Table 3.

On the flexible disk thus obtained, characteristics were evaluated by the evaluation method 2 as given above. The results are shown in Table 4.

Table 3

| Primer layer | | | |
|---|---|---|---|
| Example | Alloy element 1 (atom ratio) | Alloy element 2 (atom ratio) | Film thickness (nm) |
| Example 3-3 | Cr (80) | Ti (20) | 30 |
| Example 3-4 | Cr (80) | Ti (20) | 40 |
| Example 3-5 | Cr (90) | Ti (10) | 60 |
| Example 3-6 | Cr (95) | Ti (5) | 60 |
| Example 3-7 | Cr (80) | Be (20) | 60 |
| Example 3-8 | Cr (80) | Si (20) | 60 |
| Example 3-9 | Cr (80) | Zr (20) | 60 |
| Example 3-10 | Cr (80) | Co (20) | 60 |
| Example 3-11 | Cr (80) | Os (20) | 60 |
| Example 3-12 | Cr (80) | Re (20) | 60 |
| Example 3-13 | Cr (80) | Ru (20) | 60 |
| Example 3-14 | Cr (80) | Zn (20) | 60 |
| Example 3-15 | Cr (80) | Ta (20) | 60 |
| Example 3-16 | Cr (80) | Al (20) | 60 |
| Example 3-17 | Cr (80) | Mo (20) | 60 |
| Example 3-18 | Cr (80) | W (20) | 60 |
| Example 3-19 | Cr (80) | V (20) | 60 |
| Example 3-20 | Cr (80) | Fe (20) | 60 |
| Example 3-21 | Cr (80) | Sb (20) | 60 |
| Example 3-22 | Cr (80) | Ir (20) | 60 |

Table continued

| Primer layer | | | |
|---|---|---|---|
| Example | Alloy element 1 (atom ratio) | Alloy element 2 (atom ratio) | Film thickness (nm) |
| Example 3-23 | Cr (80) | Rh (20) | 60 |
| Example 3-24 | Cr (80) | Pt (20) | 60 |
| Example 3-25 | Cr (80) | Pd (20) | 60 |

(Example 3-26)

A flexible disk was prepared by the same procedure as in Example 3-1 except that a Ta seed layer was introduced between the undercoating layer and the Cr-Ti primer layer.
On the flexible disk thus obtained, characteristics were evaluated by the evaluation method 2 as given above. The results are shown in Table 4.

(Comparative Example 3-27)

A glass substrate of 94 mm in diameter and having mirror-polished surface was used as substrate. A magnetic recording medium having a magnetic layer, a protective layer and a lubricating layer as in Example 3-1 was prepared without forming an undercoating layer.
On the flexible disk thus obtained, characteristics were evaluated by the evaluation method 2 as given above. The results are shown in Table 4.

(Comparative example 3-1)

A flexible disk was prepared by the same procedure as in Example 3-1 except that composition of the magnetic layer was set to Co:Pt:Cr = 70:20:10 (atom ratio).
On the flexible disk thus obtained, characteristics were evaluated by the evaluation method 2 as given above. The results are shown in Table 4.

(Comparative example 3-2)

A flexible disk was prepared by the same procedure as in Example 3-1 except that chromium was used in the primer layer.
On the flexible disk thus obtained, characteristics were evaluated by the evaluation method 2 as given above. The results are shown in Table 4.

(Comparative example 3-3)

A flexible disk was prepared by the same procedure as in Comparative example 3-2 except that a tantalum seed layer was formed between the undercoating layer and the chromium-containing primer layer.
On the flexible disk thus obtained, characteristics were evaluated by the evaluation method 2 as given above. The results are shown in Table 4.

Table 4

| | Hc (kA/m) | Surface deviation ($\mu$m) | C/N (dB) | Modulation (%) | Durability time (h) |
|---|---|---|---|---|---|
| Example 3-1 | 231 | 25 | 0 | 95 | >300 |
| Example 3-2 | 239 | 30 | +1.0 | 92 | >300 |
| Example 3-3 | 199 | 30 | -3.0 | 94 | >300 |
| Example 3-4 | 215 | 35 | -1.4 | 92 | >300 |
| Example 3-5 | 191 | 25 | -3.4 | 96 | >300 |
| Example 3-6 | 175 | 40 | -4.2 | 91 | >300 |
| Example 3-7 | 227 | 20 | -0.5 | 96 | >300 |
| Example 3-8 | 211 | 15 | -1.0 | 97 | >300 |
| Example 3-9 | 208 | 17 | -1.4 | 96 | >300 |

Table continued

|  | Hc (kA/m) | Surface deviation ($\mu$m) | C/N (dB) | Modulation (%) | Durability time (h) |
|---|---|---|---|---|---|
| Example 3-10 | 238 | 35 | -0.1 | 90 | >300 |
| Example 3-11 | 223 | 30 | -0.3 | 94 | >300 |
| Example 3-12 | 227 | 35 | -0.2 | 93 | >300 |
| Example 3-13 | 247 | 35 | +0.2 | 91 | >300 |
| Example 3-14 | 231 | 30 | -0.1 | 92 | >300 |
| Example 3-15 | 227 | 35 | -0.5 | 92 | >300 |
| Example 3-16 | 215 | 40 | -1.4 | 90 | >300 |
| Example 3-17 | 231 | 30 | -0.2 | 93 | >300 |
| Example 3-18 | 219 | 40 | -1.0 | 90 | >300 |
| Example 3-19 | 215 | 40 | -1.2 | 91 | >300 |
| Example 3-20 | 223 | 40 | -0.6 | 90 | >300 |
| Example 3-21 | 221 | 30 | -0.2 | 94 | >300 |
| Example 3-22 | 225 | 35 | -0.1 | 93 | >300 |
| Example 3-23 | 207 | 35 | -0.9 | 92 | >300 |
| Example 3-24 | 239 | 40 | -0.2 | 93 | >300 |
| Example 3-25 | 223 | 30 | -0.4 | 92 | >300 |
| Example 3-26 | 247 | 20 | +1.2 | 97 | >300 |
| Comparative Example 3-27 | 231 | 10 | -1.0 | 98 | -- |
| Comparative example 3-1 | 143 | 30 | -8.2 | 90 | >300 |
| Comparative example 3-2 | 167 | 30 | -6.4 | 92 | >300 |
| Comparative example 3-3 | 187 | 20 | -3.4 | 90 | >300 |

As shown in Examples 3-1 to 3-25 in the above table, it is evident that the flexible disk of the present invention has good quality in both recording characteristics and durability. Further, in Example 3-26 with the Ta seed layer under the primer layer, magnetostatic characteristics are improved due to better adhesion, and also, C/N characteristics are improved.

On the other hand, in Comparative Example 3-27 where glass substrate was used as substrate, the value of C/N was somewhat lower compared with the flexible disk of Example 3-1, which was prepared by the same procedure. This was because the output was relatively lower and because floating amount of the head was higher in the hard disk than in the flexible disk.

In Comparative example 3-1 where nonmagnetic material ($SiO_2$) was not used in the magnetic layer, coercive force was lower and recording characteristics were poor. Further, in Comparative example 3-2 using Cr-containing primer layer and in Comparative example 3-3 using both Cr-containing primer layer and Ta seed layer, coercive force was somewhat high, but it was not possible to attain sufficient recording characteristics.

(Example 4-1)

On a polyethylene terephthalate film of 6.3 $\mu$m in thickness and with surface roughness Ra = 1.4 nm, an undercoating solution containing 3-glycidoxypropyltrimethoxysilane, phenyltriethoxysilane, hydrochloric acid, aluminum acetylacetonate, and ethanol was coated by gravure coating method. Then, this was dried and hardened at 100°C, and an undercoating layer comprising silicone resin of 1.0 $\mu$m in thickness was prepared.

On the undercoating layer thus obtained, a coating solution containing silica sol of 25 nm in particle size and the undercoating solution were coated by gravure coating method. Projections of 15 nm in height were formed on the undercoating layer in density of 10 projections/$\mu$m$^2$. Also, the undercoating layer was formed on both surfaces of the flexible polymer support member film. The flexible polymer support member film was used an original material, and this was mounted on a sputtering apparatus.

Next, this original material for the magnetic tape was mounted on a web sputtering apparatus shown in Fig. 7, and this was transported while the film was closely fitted on a water-cooled film-forming roll. On the undercoating layer, a primer layer comprising Ru:Cr = 90:10 (atom ratio) was formed in thickness of 40 nm by DC magnetron sputtering method. Next, a magnetic layer with composition of CoPtCr alloy (Co:Pt:Cr = 70:20:10 (atom ratio):$SiO_2$ = 88:12 (atom ratio) was formed in thickness of 25 nm.

The primer layer and the magnetic layer were formed on both surfaces of the film. Next, the original material with the magnetic layer formed on it was mounted on a web type CVD apparatus as shown in Fig. 8. By RF plasma CVD method using ethylene gas, nitrogen gas and argon gas as reaction gas, a nitrogen-added diamond-like carbon (DLC) protective film with composition of C:H:N = 62:29:7 (mol ratio) was formed in thickness of 10 nm. In this case, bias voltage of -400 V was applied on the magnetic layer. The protective film was also formed on both surfaces of the film.

Further, perfluoropolyether lubricant (Fomblin Z-Dol; manufactured by Ausimont Co., Ltd.) having hydroxyl group at molecular terminal was dissolved in a fluorine type solvent (HFE-7200; Manufactured by Sumitomo 3M Co., Ltd.), and this solution was coated on the surface of the protective layer by gravure coating method, and a lubricating layer of 1 nm in thickness was prepared.

From the original material thus obtained, a piece in form of a disk with diameter of 94 mm was punched out. After this was polished, it was engaged in a synthetic resin cartridge for flexible disk (for Zip 100; manufactured by Fuji Photo Film Co., Ltd.), and a flexible disk was prepared.

On the flexible disk thus obtained, characteristics were evaluated by the evaluation method 2 as given below. The results are shown in Table 6.

(Example 4-2)

From the original material with the undercoating layer formed on it in Example 4-1, a disk-like sheet of 130 mm in diameter was punched out, and this was fixed on a circular ring. Using a batch type sputtering apparatus, a primer layer and a magnetic layer with the same compositions as in Example 4-1 were formed on both surfaces of the sheet, and a protective film was also formed using CVD apparatus. On this sheet, the same lubricating layer as in Example 2-1 was formed by dip coating method. Next, a piece in form of a disk of 94 mm in diameter was punched out from this sheet. After polishing with tape, this was engaged on a synthetic resin cartridge for flexible disk (for zip 100; Fuji Photo Film Co., Ltd.), and a flexible disk was prepared.

On the flexible disk thus prepared, characteristics were evaluated by the evaluation method 2 as given below. The results are shown in Table 6.

(Examples 4-3 to 4-25)

A flexible disk was prepared by the same procedure as in Example 4-1 except that composition and thickness of the primer layer were set to the values shown in Table 5.

On the flexible disk thus obtained, characteristics were evaluated by the evaluation method 2 as given above. The results are shown in Table 6.

Table 5

| Primer layer | | | |
|---|---|---|---|
| Example | Alloy element 1 (atom ratio) | Alloy element 2 (atom ratio) | Film thickness (nm) |
| Example 4-3 | Ru (90) | Cr (10) | 30 |
| Example 4-4 | Ru (90) | Cr (10) | 60 |
| Example 4-5 | Ru (80) | Cr (20) | 40 |
| Example 4-6 | Ru (95) | Cr (5) | 40 |
| Example 4-7 | Ru (90) | Be (10) | 40 |
| Example 4-8 | Ru (90) | Si (10) | 40 |
| Example 4-9 | Ru (90) | Zr (10) | 40 |
| Example 4-10 | Ru (90) | Co (10) | 40 |
| Example 4-11 | Ru (90) | Os (10) | 40 |
| Example 4-12 | Ru (90) | Re (10) | 40 |
| Example 4-13 | Ru (90) | Ti (10) | 40 |
| Example 4-14 | Ru (90) | Zn (10) | 40 |
| Example 4-15 | Ru (90) | Ta (10) | 40 |
| Example 4-16 | Ru (90) | A1 (10) | 40 |
| Example 4-17 | Ru (90) | Mo (10) | 40 |

Table continued

| Primer layer | | | |
|---|---|---|---|
| Example | Alloy element 1 (atom ratio) | Alloy element 2 (atom ratio) | Film thickness (nm) |
| Example 4-18 | Ru (90) | W (10) | 40 |
| Example 4-19 | Ru (90) | Fe (10) | 40 |
| Example 4-20 | Ru (90) | Sb (10) | 40 |
| Example 4-21 | Ru (90) | Ir (10) | 40 |
| Example 4-22 | Ru (90) | Rh (10) | 40 |
| Example 4-23 | Ru (90) | Pt (10) | 40 |
| Example 4-24 | Ru (90) | Pd (10) | 40 |

(Comparative Example 4-25)

A glass substrate of 94 mm in diameter and having mirror-polished surface was used as substrate. A magnetic recording medium having a magnetic layer, a protective layer and a lubricating layer as in Example 4-1 was prepared without forming an undercoating layer.

On the flexible disk thus obtained, characteristics were evaluated by the evaluation method 2 as given above. The results are shown in Table 6.

(Comparative example 4-1)

A flexible disk was prepared by the same procedure as in Example 4-1 except that composition of the magnetic layer was set to Co:Pt:Cr = 70:20:10 (atom ratio).

On the flexible disk thus obtained, characteristics were evaluated by the evaluation method 2 as given above. The results are shown in Table 6.

(Comparative example 4-2)

A flexible disk was prepared by the same procedure as in Example 4-1 except that ruthenium was used in the primer layer.

On the flexible disk thus obtained, characteristics were evaluated by the evaluation method 2 as given above. The results are shown in Table 6.

(Comparative example 4-3)

A flexible disk was prepared by the same procedure as in Comparative example 4-2 except that a Ta seed layer was formed between the undercoating layer and the ruthenium-containing primer layer.

On the flexible disk thus obtained, characteristics were evaluated by the evaluation method 2 as given above. The results are shown in Table 6.

Table 6

| | HC (kA/m) | Surface deviation ($\mu$m) | C/N (dB) | Modulation (%) | Durability time (h) |
|---|---|---|---|---|---|
| Example 4-1 | 263 | 25 | 0 | 95 | >300 |
| Example 4-2 | 271 | 30 | +1.0 | 92 | >300 |
| Example 4-3 | 239 | 30 | -1.0 | 94 | >300 |
| Example 4-4 | 247 | 35 | -1.4 | 92 | >300 |
| Example 4-5 | 231 | 25 | -1.2 | 96 | >300 |
| Example 4-6 | 263 | 40 | -0.8 | 91 | >300 |
| Example 4-7 | 247 | 20 | 0 | 96 | >300 |
| Example 4-8 | 239 | 18 | 0 | 97 | >300 |
| Example 4-9 | 243 | 25 | -0.2 | 96 | >300 |
| Example 4-10 | 279 | 35 | 0 | 90 | >300 |
| Example 4-11 | 263 | 30 | -0.2 | 94 | >300 |

Table continued

|  | HC (kA/m) | Surface deviation ($\mu$m) | C/N (dB) | Modulation (%) | Durability time (h) |
|---|---|---|---|---|---|
| Example 4-12 | 267 | 35 | -0.2 | 93 | >300 |
| Example 4-13 | 256 | 30 | -0.6 | 90 | >300 |
| Example 4-14 | 251 | 30 | -0.6 | 92 | >300 |
| Example 4-15 | 247 | 35 | -0.8 | 92 | >300 |
| Example 4-16 | 231 | 40 | -1.4 | 90 | >300 |
| Example 4-17 | 255 | 35 | 0 | 93 | >300 |
| Example 4-18 | 247 | 40 | -1.0 | 90 | >300 |
| Example 4-19 | 271 | 40 | -0.6 | 90 | >300 |
| Example 4-20 | 253 | 30 | -0.2 | 94 | >300 |
| Example 4-21 | 259 | 35 | -0.2 | 93 | >300 |
| Example 4-22 | 255 | 35 | -0.2 | 92 | >300 |
| Example 4-23 | 271 | 40 | -0.2 | 93 | >300 |
| Example 4-24 | 247 | 30 | -0.4 | 92 | >300 |
| Comparative Example 4-25 | 247 | 10 | -1.0 | 98 | -- |
| Comparative example 4-1 | 143 | 30 | -6.2 | 94 | >300 |
| Comparative example 4-2 | 191 | 82 | -8.4 | 73 | 12 |
| Comparative example 4-3 | 255 | 60 | -1.0 | 85 | 220 |

As shown in Examples 4-1 to 4-24 and in Comparative examples 4-25, 4-1 and 4-3 in the above table, it is evident that the flexible disk of the present invention has good quality in both recording characteristics and durability. On the other hand, in comparative Example 4-25 using glass substrate as substrate, the value of C/N was somewhat lower compared with the flexible disk of Example 4-1 prepared by the same procedure. This is because the output was relatively lower and because floating amount of the head was higher in the hard disk than in the flexible disk. Also, in Comparative example 4-1 where nonmagnetic material ($SiO_2$) was not used in the magnetic layer, coercive force was lower and recording characteristics were poor. In Comparative example 4-2 using the ruthenium-containing primer layer, coercive force was somewhat high, but the support member film was deformed due to film stress. Also, C/N characteristics were decreased with the increase of surface deviation. In Comparative example 4-3 with a TiW seed layer under the primer layer, the increase of surface deviation could not be prevented due to the influence of film stress caused by the ruthenium-containing primer layer, and C/N characteristics were somewhat lower.

In the magnetic recording medium of the present invention, a magnetic layer comprising a cobalt-containing ferromagnetic metal alloy and a nonmagnetic oxide is formed on a flexible polymer support member. As a result, a magnetic layer with excellent characteristics can be formed on the flexible polymer support member at the temperature as low as room temperature. Thus, it is possible to provide a magnetic tape and a flexible disk, which are suitable for high-density recording.

## Claims

1. A magnetic recording medium, comprising a magnetic layer at least on one surface of a flexible polymer support member, said magnetic layer comprises a cobalt-containing ferromagnetic metal alloy and a nonmagnetic oxide, **characterized in that** the mixing ratio of the cobalt-containing ferromagnetic metal alloy and the nonmagnetic oxide is in the following range:

```
ferromagnetic metal alloy : nonmagnetic oxide = 90 : 10 to
85 : 15 (atom ratio).
```

**2.** The magnetic recording medium according to claim 1, wherein the magnetic layer comprises a ferromagnetic metal alloy containing at least cobalt, platinum and chromium, and a nonmagnetic oxide.

**3.** The magnetic recording medium according to claim 1 or 2, wherein there is provided a chromium-containing primer layer which contains chromium and at least one type of element selected from a group of cobalt, beryllium, osmium, rhenium, titanium, zinc, tantalum, aluminum, molybdenum, tungsten, vanadium, iron, antimony, iridium, ruthenium, rhodium, platinum, palladium, silicon, and zirconium at least on one surface of the nonmagnetic support member.

**4.** The magnetic recording medium according to claim 1, wherein the magnetic recording medium comprises a chromium-containing primer layer and a magnetic layer at least on one surface of a flexible polymer support member, said chromium-containing primer layer contains chromium and at least one type of element selected from a group of cobalt, beryllium, osmium, rhenium, titanium, zinc, tantalum, aluminum, molybdenum, tungsten, vanadium, iron, antimony, iridium, ruthenium, rhodium, platinum, palladium, silicon, and zirconium, and said magnetic layer comprises a ferromagnetic metal alloy containing at least cobalt, platinum and chromium, and a nonmagnetic oxide.

**5.** The magnetic recording medium according to claim 1, wherein the magnetic recording medium comprises a primer layer containing at least ruthenium, and a magnetic layer at least on one surface of a flexible polymer support member, said magnetic layer comprising a ferromagnetic metal alloy containing at least cobalt, platinum and chromium, and a nonmagnetic oxide.

**6.** A method for manufacturing a magnetic recording medium, said method comprising the steps of transporting a flexible polymer support member on rolls, and of providing magnetic layer by sputtering using a target containing a mixture of a cobalt-containing ferromagnetic metal alloy and a nonmagnetic oxide without heating the support member closely fitted on the rolls, wherein the mixing ratio of the cobalt-containing ferromagnetic metal alloy and the nonmagnetic oxide is in the following range:

```
ferromagnetic metal alloy : nonmagnetic oxide = 90 : 10 to
85 : 15 (atom ratio).
```

**7.** The method for manufacturing a magnetic recording medium according to claim 6, wherein the rolls are cooled down.

**8.** The method for manufacturing a magnetic recording medium according to claim 6 or 7, wherein the sputtering is DC sputtering.

**9.** The method for manufacturing a magnetic recording medium according to any one of claims 6 to 8, wherein the target of the mixture is produced by hot press.

**10.** The method for manufacturing a magnetic recording medium according to any one of claims 6 to 9, wherein there is further provided a step of forming a magnetic layer after forming a chromium-containing primer layer, which contains chromium, and at least one type of element selected from a group of cobalt, beryllium, osmium, rhenium, titanium, zinc, tantalum, aluminum, molybdenum, tungsten, vanadium, iron, antimony, iridium, ruthenium, rhodium, platinum, palladium, silicon, and zirconium at least on one surface of the nonmagnetic support member.

**11.** The method for manufacturing a magnetic recording medium according to any one of claims 6 to 9, wherein there is further provided a step of forming a magnetic layer after forming a primer layer containing at least ruthenium at least on one surface of the nonmagnetic support member.

**12.** The method for manufacturing a magnetic recording medium according to any one of claims 6 to 11, wherein the ferromagnetic metal alloy contains at least cobalt, platinum and chromium.

**Patentansprüche**

**1.** Magnetisches Aufzeichnungsmedium, das eine magnetische Schicht auf wenigstens einer Oberfläche eines flexiblen Polymerträgerbauteils umfasst, wobei die magnetische Schicht eine kobalthaltige ferromagnetische Metallegierung und ein nicht-magnetisches Oxid umfasst, **dadurch gekennzeichnet, dass** das Mischungsverhältnis der kobalthaltigen ferromagnetischen Metallegierung und des nicht-magnetischen Oxids im folgenden Bereich liegt:

```
ferromagnetische Metallegierung : nicht-
magnetisches Oxid = 90:10 bis 85:15
(Atomverhältnis).
```

2. Magnetisches Aufzeichnungsmedium gemäss Anspruch 1, worin die magnetische Schicht eine ferromagnetische Metallegierung, die zumindest Kobalt, Platin und Chrom enthält, und ein nicht-magnetisches Oxid umfasst.

3. Magnetisches Aufzeichnungsmedium gemäss Anspruch 1 oder 2, worin eine chromhaltige Grundierungsschicht, die Chrom und wenigstens eine Art eines Elements enthält, das aus der Gruppe von Kobalt, Beryllium, Osmium, Rhenium, Titan, Zink, Tantal, Aluminium, Molybdän, Wolfram, Vanadium, Eisen, Antimon, Iridium, Ruthenium, Rhodium, Platin, Palladium, Silicium und Zirkonium ausgewählt wird, auf wenigstens einer Oberfläche des nicht-magnetischen Trägerbauteils vorgesehen wird.

4. Magnetisches Aufzeichnungsmedium gemäss Anspruch 1, worin das magnetische Aufzeichnungsmedium eine chromhaltige Grundierungsschicht und eine magnetische Schicht auf wenigstens einer Oberfläche eines flexiblen Polymerträgerbauteils umfasst, wobei die chromhaltige Grundierungsschicht Chrom und wenigstens eine Art eines Elements, das aus der Gruppe von Kobalt, Beryllium, Osmium, Rhenium, Titan, Zink, Tantal, Aluminium, Molybdän, Wolfram, Vanadium, Eisen, Antimon, Iridium, Ruthenium, Rhodium, Platin, Palladium, Silicium und Zirkonium ausgewählt wird, enthält, und die magnetische Schicht eine ferromagnetische Metallegierung, die zumindest Kobalt, Platin und Chrom enthält, und ein nicht-magnetisches Oxid umfasst.

5. Magnetisches Aufzeichnungsmedium gemäss Anspruch 1, worin das magnetische Aufzeichnungsmedium eine Grundierungsschicht, die zumindest Ruthenium enthält, und eine magnetische Schicht auf wenigstens einer Oberfläche eines flexiblen Polymerträgerbauteils umfasst, wobei die magnetische Schicht eine ferromagnetische Metallegierung, die zumindest Kobalt, Platin und Chrom enthält, und ein nicht-magnetisches Oxid umfasst.

6. Verfahren zur Herstellung eines magnetischen Aufzeichnungsmediums, worin das Verfahren die Schritte des Transportierens eines flexiblen Polymerträgerbauteils auf Rollen und des Vorsehens einer magnetischen Schicht durch Sputtern unter Verwendung eines Ziels, das eine Mischung aus einer kobalthaltigen ferromagnetischen Metallegierung und einem nicht-magnetischen Oxid enthält, ohne Erwärmen des Trägerbauteils, eng an die Rollen angepasst, umfasst, worin das Mischungsverhältnis der kobalthaltigen ferromagnetischen Metallegierung und des nicht-magnetischen Oxids im folgenden Bereich liegt:

```
ferromagnetische Metallegierung : nicht-
magnetisches Oxid = 90:10 bis 85:15
(Atomverhältnis).
```

7. Verfahren zur Herstellung eines magnetischen Aufzeichnungsmediums gemäss Anspruch 6, worin die Rollen abgekühlt werden.

8. Verfahren zur Herstellung eines magnetischen Aufzeichnungsmediums gemäss Anspruch 6 oder 7, worin das Sputtern Kathodenzerstäubung (DC-Sputtern) ist.

9. Verfahren zur Herstellung eines magnetischen Aufzeichnungsmediums gemäss irgendeinem der Ansprüche 6 bis 8, worin das Ziel (target) der Mischung durch Heisspressen hergestellt wird.

10. Verfahren zur Herstellung eines magnetischen Aufzeichnungsmediums gemäss irgendeinem der Ansprüche 6 bis 9, worin weiterhin ein Schritt der Erzeugung einer magnetischen Schicht nach der Erzeugung einer chromhaltigen Grundierungsschicht, die Chrom und wenigstens eine Art eines Elements enthält, das aus der Gruppe Kobalt, Beryllium, Osmium, Rhenium, Titan, Zink, Tantal, Aluminium, Molybdän, Wolfram, Vanadium, Eisen, Antimon, Iridium, Ruthenium, Rhodium, Platin, Palladium, Silicium und Zirkonium ausgewählt wird, auf wenigstens einer Oberfläche des nicht-magnetischen Trägerbauteils vorgesehen wird.

11. Verfahren zur Herstellung eines magnetischen Aufzeichnungsmedium gemäss irgendeinem der Ansprüche 6 bis 9, worin weiterhin ein Schritt der Erzeugung einer magnetischen Schicht nach der Erzeugung einer Grundierungsschicht auf zumindest einer Oberfläche des nicht-magnetischen Trägerbauteils, die zumindest Ruthenium enthält, vorgesehen wird.

12. Verfahren zur Herstellung eines magnetischen Aufzeichnungsmediums gemäss irgendeinem der Ansprüche 6 bis 11, worin die ferromagnetische Metallegierung zumindest Kobalt, Platin und Chrom enthält.

**Revendications**

1. Support d'enregistrement magnétique, comprenant une couche magnétique au moins sur une surface d'un organe de support polymère souple, ladite couche magnétique comprend un alliage de métaux ferromagnétiques contenant du cobalt et un oxyde non magnétique, **caractérisé en ce que** le rapport du mélange de l'alliage de métaux ferromagnétiques contenant du cobalt et de l'oxyde non magnétique est dans la plage suivante :

```
alliage de métaux ferromagnétiques : oxyde non magnétique
= 90:10 à 85:15 (rapport atomique).
```

2. Support d'enregistrement magnétique selon la revendication 1, dans lequel la couche magnétique comprend un alliage de métaux ferromagnétiques contenant au moins du cobalt, du platine et du chrome et un oxyde non magnétique.

3. Support d'enregistrement magnétique selon la revendication 1 ou 2, dans lequel une couche primaire contenant du chrome est fournie et contient du chrome et au moins un type d'élément choisi dans un groupe composé de cobalt, béryllium, osmium, rhénium, titane, zinc, tantale, aluminium, molybdène, tungstène, vanadium, fer, antimoine, iridium, ruthénium, rhodium, platine, palladium, silicium et zirconium au moins sur une surface de l'organe de support non magnétique.

4. Support d'enregistrement magnétique selon la revendication 1, dans lequel le support d'enregistrement magnétique comprend une couche primaire contenant du chrome et une couche magnétique au moins sur une surface d'un organe de support polymère souple, ladite couche primaire contenant du chrome contient du chrome et au moins un type d'élément choisi dans un groupe composé de cobalt, béryllium, osmium, rhénium, titane, zinc, tantale, aluminium, molybdène, tungstène, vanadium, fer, antimoine, iridium, ruthénium, rhodium, platine, palladium, silicium et zirconium et ladite couche magnétique comprend un alliage de métaux ferromagnétiques contenant au moins du cobalt, du platine et du chrome et un oxyde non magnétique.

5. Support d'enregistrement magnétique selon la revendication 1, dans lequel le support d'enregistrement magnétique comprend une couche primaire contenant au moins du ruthénium et une couche magnétique au moins sur une surface d'un organe de support polymère souple, ladite couche magnétique comprenant un alliage de métaux ferromagnétiques contenant au moins du cobalt, du platine et du chrome et un oxyde non magnétique.

6. Procédé destiné à fabriquer un support d'enregistrement magnétique, ledit procédé comprenant les étapes consistant à transporter un organe de support polymère souple sur des rouleaux, et consistant à fournir une couche magnétique par pulvérisation en utilisant une cible contenant un mélange d'un alliage de métaux ferromagnétiques contenant du cobalt et un oxyde non magnétique sans chauffer l'organe de support étroitement ajusté sur les rouleaux, dans lequel le rapport du mélange de l'alliage de métaux ferromagnétiques contenant du cobalt et de l'oxyde non magnétique est dans la plage suivante :

```
alliage de métaux ferromagnétiques : oxyde non magnétique
= 90:10 à 85:15 (rapport atomique).
```

**7.** Procédé destiné à fabriquer un support d'enregistrement magnétique selon la revendication 6, dans lequel les rouleaux sont refroidis.

**8.** Procédé destiné à fabriquer un support d'enregistrement magnétique selon la revendication 6 ou 7, dans lequel la pulvérisation est une pulvérisation DC.

**9.** Procédé destiné à fabriquer un support d'enregistrement magnétique selon l'une quelconque des revendications 6 à 8, dans lequel la cible du mélange est produite par pressage à chaud.

**10.** Procédé destiné à fabriquer un support d'enregistrement magnétique selon l'une quelconque des revendications 6 à 9, dans lequel une étape consistant à former une couche magnétique après formation d'une couche primaire contenant du chrome, qui contient du chrome, et au moins un type d'élément choisi dans un groupe composé de cobalt, béryllium, osmium, rhénium, titane, zinc, tantale, aluminium, molybdène, tungstène, vanadium, fer, antimoine, iridium, ruthénium, rhodium, platine, palladium, silicium et zirconium est en outre prévue au moins sur une surface de l'organe de support non magnétique.

**11.** Procédé destiné à fabriquer un support d'enregistrement magnétique selon l'une quelconque des revendications 6 à 9, dans lequel une étape consistant à former une couche magnétique après formation d'une couche primaire contenant au moins du ruthénium au moins sur une surface de l'organe de support non magnétique est en outre prévue.

**12.** Procédé destiné à fabriquer un support d'enregistrement magnétique selon l'une quelconque des revendications 6 à 11, dans lequel l'alliage de métaux ferromagnétiques contient au moins du cobalt, du platine et du chrome.

Fig.1 (A)

Fig.1 (B)

Fig. 2 (A)

Fig. 2 (B)

Fig. 3 (A)

Fig. 3 (B)

Fig. 4 (A)

Fig. 4 (B)

Fig. 5 (A)

Fig. 5 (B)

Fig. 6 (A)

Fig. 6 (B)

Fig. 7

EP 1 293 969 B1

Fig. 8